# EUROPEAN PATENT APPLICATION

(11) **EP 4 503 684 A1**
(43) Date of publication of application: **05.02.2025**
(21) Application number: 23773919.8
(22) Date of filing: 22.03.2023
(51) Int. Cl.: H04W 8/14

(54) **USER PLANE FUNCTION NETWORK ELEMENT DETERMINATION METHOD AND DEVICE**

(30) Priority: 25.03.2022 CN 202210307061; 06.05.2022 CN 202210488608; 30.09.2022 CN 202211218240
(71) Applicant: VIVO MOBILE COMMUNICATION CO., LTD., Dongguan, Guangdong 523863 (CN)
(72) Inventor: CHONG, Weiwei, Dongguan, Guangdong 523863 (CN); LV, Huazhang, Dongguan, Guangdong 523863 (CN)
(74) Representative: Shieldmark
(86) International application number: PCT/CN2023/083099
(87) International publication number: WO 2023/179672

(57) **Abstract**

This application belongs to the field of communication technologies, and discloses a method and an apparatus for determining a user plane function network element. The method for determining a user plane function network element in embodiments of this application includes: transmitting, by a user plane function network element, a network element registration request message to a first network element, where the network element registration request message is used to register network element information of the user plane function network element to the first network element; and obtaining, by the user plane function network element, a network element registration response message transmitted by the first network element, where the network element registration request message includes at least one of the following: service area information of the user plane function network element; identification information of a data type supported by the user plane function network element; information about a session management function network element associated with the user plane function network element; direct-obtaining capability indication information for indicating that the user plane function network element supports a data consumption network element in directly obtaining data from the user plane function network element; and indirect-obtaining capability indication information for indicating that the user plane function network element supports a data consumption network element in indirectly obtaining data from the user plane function network element by using a session management function network element.

## Description

### CROSS-REFERENCE TO RELATED APPLICATIONS

This application claims priority to Chinese Patent Application No. 2022103070617, filed on March 25, 2022 and entitled "INFORMATION TRANSMISSION METHOD AND APPARATUS, TERMINAL, AND STORAGE MEDIUM", claims priority to Chinese Patent Application No. 2022104886088, filed on May 6, 2022 and entitled "INFORMATION TRANSMISSION METHOD AND APPARATUS, TERMINAL, AND STORAGE MEDIUM", and claims priority to Chinese Patent Application No. 202211218240X, filed on September 30, 2022 and entitled "INFORMATION TRANSMISSION METHOD AND APPARATUS, TERMINAL, AND STORAGE MEDIUM", which are incorporated herein by reference in their entireties.

### TECHNICAL FIELD

This application belongs to the field of communication technologies, and specifically, relates to a method for obtaining data of a user plane function (User Plane Function, UPF) and a network element.

### BACKGROUND

During a network data analysis, a network data analytics function (Network Data Analytics Function, NWDAF) network element needs to collect relevant data from some core network elements, third-party servers, terminals/user equipments (User Equipment, UE), or the like to complete a network data analysis or prediction.

In related technologies, a data consumption network element (such as an NWDAF network element, an AF network element, or a PCF network element) cannot determine a corresponding UPF network element, or cannot obtain data from a corresponding UPF network element.

### SUMMARY

Embodiments of this application provide a method for determining a UPF network element and a network element, so that a technical problem of being incapable of obtaining data from a corresponding UPF network element can be resolved.

According to a first aspect, a method for determining a user plane function network element is provided, where the method includes:
transmitting, by a user plane function network element, a network element registration request message to a first network element, where the network element registration request message is used to register network element information of the user plane function network element to the first network element; and
obtaining, by the user plane function network element, a network element registration response message transmitted by the first network element, where
the network element registration request message includes at least one of the following information corresponding to the user plane function network element:
   service area information of the user plane function network element;
   identification information of a data type supported by the user plane function network element;
   information about a session management function network element associated with the user plane function network element; direct-obtaining capability indication information, where the direct-obtaining capability indication information is used to indicate that the user plane function network element supports a data consumption network element in directly obtaining data from the user plane function network element; and
   indirect-obtaining capability indication information, where the indirect-obtaining capability indication information is used to indicate that the user plane function network element supports a data consumption network element in indirectly obtaining data from the user plane function network element by using a session management function network element.

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Optionally, the first network element includes a network repository function network element or the session management function network element.

According to a second aspect, a method for determining a user plane function network element is provided, including:
obtaining, by a first network element, a network element registration request message transmitted by a user plane function network element, where the network element registration request message is used to register network element information of the user plane function network element to the first network element, where
the network element registration request message includes at least one of the following information corresponding to the user plane function network element:
   service area information of the user plane function network element;
   identification information of a data type supported by the user plane function network element;
   information about a session management function network element associated with the user plane function network element;
   direct-obtaining capability indication information, where the direct-obtaining capability indication information is used to indicate that the user plane function network element supports a data consumption network element in directly obtaining data from the user plane function network element; and
   indirect-obtaining capability indication information, where the indirect-obtaining capability indication information is used to indicate that the user plane function network element supports a data consumption network element in indirectly obtaining data from the user plane function network element by using a session management function network element; and
   transmitting, by the first network element, a network element registration response message to the user plane function network element.

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Optionally, the method further includes:
obtaining, by the first network element, a network element discovery request message transmitted by the data consumption network element, where the network element discovery request message includes first information, where the first information includes at least one of the following information:
information about a target area, used to indicate an area of interest to the data consumption network element;
target data type identification information, used to indicate a data type of interest to the data consumption network element;
information about a target DNN;
information about a target slice;
information about a target SMF area;
IP address information of target UE;
third indication information, where the third indication information is used to indicate that the data consumption network element requires a user plane function network element supporting an event exposure service; and
fourth indication information, where the fourth indication information is used to indicate that the data consumption network element requires a user plane function network element supporting an ATSSS service;
determining, by the first network element based on the network element discovery request message, a target user plane function network element that matches the first information; and
transmitting, by the first network element, a network element discovery response message to the data consumption network element.

Optionally, the determining a target user plane function network element that matches the first information includes:
determining, by the first network element, the target user plane function network element based on the information about the target area included in the first information, where a service area of the target user plane function network element matches the target area; and/or
determining, by the first network element, the target user plane function network element based on the information about the target area included in the first information, where a service area of a session management function network element associated with the target user plane function network element matches the target area; and/or
determining, by the first network element, the target user plane function network element based on the target data type identification information included in the first information, where the target user plane function network element is capable of providing data corresponding to the target data type identification information; and/or
determining, by the first network element, the target user plane function network element based on the information about the target DNN included in the first information, where information about a DNN that is capable of being served by the target user plane function network element matches the information about the target DNN; and/or
determining, by the first network element, the target user plane function network element based on the information about the target slice included in the first information, where information about a slice that is capable of being served by the target user plane function network element matches the information about the target slice; and/or
determining, by the first network element, the target user plane function network element based on the information about the target SMF area included in the first information, where information about an SMF area that is capable of being served by the target user plane function network element matches the information about the target SMF area; and/or
determining, by the first network element, the target user plane function network element based on the IP address information of the target UE included in the first information, where IP address information of UE that is capable of being served by the target user plane function network element matches the IP address information of the target UE;
determining, by the first network element, the target user plane function network element based on the third indication information included in the first information, where the target user plane function network element supports an event exposure service; and/or
determining, by the first network element, the target user plane function network element based on the fourth indication information included in the first information, where the target user plane function network element supports an ATSSS service.

Optionally, the network element discovery response message includes at least one of the following: information about the target user plane function network element and information about the session management function network element associated with the target user plane function network element.

Optionally, the method further includes:
determining, by the first network element based on the target data type identification, that the target user plane function network element supports directly obtaining the data corresponding to the target data type identification information.

Optionally, the network element discovery response message includes direct-obtaining capability indication information, and the direct-obtaining capability indication information is used to indicate that the target user plane function network element supports the data consumption network element in directly obtaining data from the target user plane function network element.

Optionally, the network element discovery response message includes an identifier or address information of the target user plane function network element.

Optionally, the method further includes:
determining, by the first network element based on the target data type identification information, that the target user plane function network element supports indirectly obtaining the data corresponding to the target data type identification information.

Optionally, the network element discovery response message includes indirect-obtaining capability indication information, and the indirect-obtaining capability indication information is used to indicate that the target user plane function network element supports the data consumption network element in indirectly obtaining data from the target user plane function network element by using the session management function network element.

Optionally, the network element discovery response message includes information about a target session management function network element associated with the target user plane function network element.

Optionally, the first network element includes: the session management function network element or a network repository function network element.

Optionally, the first network element includes a network repository function network element, and the data consumption network element includes a network data analytics function network element or an application function network element; or the first network element includes the session management function network element, and the data consumption network element includes a network data analytics function network element or an application function network element; the first network element includes a network repository function network element, and the data consumption network element includes the session management function network element.

According to a third aspect, a method for determining a user plane function network element is provided, including:
transmitting, by a data consumption network element, a network element discovery request message to a first network element, where the network element discovery request message includes first information, where the first information is used to determine a target user plane function network element that matches the first information; and the first information includes at least one of the following information:
information about a target area, used to indicate an area of interest to the data consumption network element; and
target data type identification information, used to indicate a data type of interest to the data consumption network element; and
obtaining, by the data consumption network element, a network element discovery response message fed back by the first network element.

Optionally, a service area of the target user plane function network element matches the target area; and/or
a service area of a session management function network element associated with the target user plane function network element matches the target area; and/or
the target user plane function network element is determined by the first network element based on the target data type identification information included in the first information, and the target user plane function network element is capable of providing data corresponding to the target data type identification information.

Optionally, the network element discovery response message includes at least one of the following: information about the target user plane function network element and information about the session management function network element associated with the target user plane function network element.

Optionally, the network element discovery response message includes direct-obtaining capability indication information, and the direct-obtaining capability indication information is used to indicate that the target user plane function network element supports the data consumption network element in directly obtaining data from the user plane function network element.

Optionally, the network element discovery response message includes an identifier or address information of the target user plane function network element.

Optionally, the method further includes:
directly transmitting, by the data consumption network element, a data obtaining request message to the target user plane function network element; and
obtaining, by the data consumption network element, a data obtaining response message transmitted by the target user plane function network element, where the data obtaining response message includes target data corresponding to the data obtaining request message.

Optionally, the network element discovery response message includes indirect-obtaining capability indication information, and the indirect-obtaining capability indication information is used to indicate that the target user plane function network element supports the data consumption network element in indirectly obtaining data from the user plane function network element by using the session management function network element.

Optionally, the network element discovery response message includes information about a target session management function network element associated with the target user plane function network element.

Optionally, the method further includes:
transmitting, by the data consumption network element, a data obtaining request message to the target session management function network element; and
obtaining, by the data consumption network element, a data obtaining response message transmitted by the target session management function network element or the user plane function network element, where the data obtaining response message includes target data corresponding to the data obtaining request message.

Optionally, the data consumption network element includes a network data analytics function network element or an application function network element, and the first network element includes the session management function network element; or
the data consumption network element includes a network data analytics function network element or an application function network element, and the first network element includes a network repository function network element; or
the data consumption network element includes the session management function network element, and the first network element includes a network repository function network element.

Optionally, when the data consumption network element includes the session management function network element, and the first network element includes the network repository function network element, the method further includes:
receiving, by the data consumption network element, a network element information obtaining request transmitted by a second network element, where the network element information obtaining request includes third information; and the third information is used to determine a user plane function network element that matches the third information; and transmitting, by the data consumption network element, a network element information obtaining response to the second network element, where the network element information obtaining response includes the information about the target user plane function network element; and
the third information includes at least one of the following:
   information about a first target area, used to indicate an area of interest to the second network element;
   first target data type identification information, used to indicate a data type of interest to the second network element;
   information about a first target DNN;
   information about a first target slice;
   information about a first target SMF area;
   IP address information of first target UE;
   fifth indication information, where the fifth indication information is used to indicate that the second network element requires a user plane function network element supporting an event exposure service; and
   sixth indication information, where the sixth indication information is used to indicate that the second network element requires a user plane function network element supporting an ATSSS service.

Optionally, the data consumption network element determines the first information based on the third information.

According to a fourth aspect, an apparatus for determining a user plane function network element is provided, where the apparatus includes:
a registration module, configured to transmit a network element registration request message to a first network element, where the network element registration request message is used to register network element information of the user plane function network element to the first network element; and
a first obtaining module, configured to obtain a network element registration response message transmitted by the first network element, where
the network element registration request message includes at least one of the following information corresponding to the user plane function network element:
   service area information of the user plane function network element;
   identification information of a data type supported by the user plane function network element;
   information about a session management function network element associated with the user plane function network element;
   direct-obtaining capability indication information, where the direct-obtaining capability indication information is used to indicate that the user plane function network element supports a data consumption network element in directly obtaining data from the user plane function network element; and
   indirect-obtaining capability indication information, where the indirect-obtaining capability indication information is used to indicate that the user plane function network element supports a data consumption network element in indirectly obtaining data from the user plane function network element by using a session management function network element.

According to a fifth aspect, an apparatus for determining a user plane function network element is provided, including:
a second obtaining module, configured to obtain a network element registration request message transmitted by a user plane function network element, where the network element registration request message is used to register network element information of the user plane function network element to a first network element, where
the network element registration request message includes at least one of the following information corresponding to the user plane function network element:
   service area information of the user plane function network element;
   identification information of a data type supported by the user plane function network element;
   information about a session management function network element associated with the user plane function network element;
   direct-obtaining capability indication information, where the direct-obtaining capability indication information is used to indicate that the user plane function network element supports a data consumption network element in directly obtaining data from the user plane function network element; and
   indirect-obtaining capability indication information, where the indirect-obtaining capability indication information is used to indicate that the user plane function network element supports a data consumption network element in indirectly obtaining data from the user plane function network element by using a session management function network element; and
   a first transmitting module, configured to transmit a network element registration response message to the user plane function network element.

According to a sixth aspect, an apparatus for determining a user plane function network element is provided, including:
a second transmitting module, configured to transmit a network element discovery request message to a first network element, where the network element discovery request message includes first information, where the first information is used to determine a target user plane function network element that matches the first information; and the first information includes at least one of the following information:
information about a target area, used to indicate an area of interest to a data consumption network element; and
target data type identification information, used to indicate a data type of interest to a data consumption network element; and
a third obtaining module, configured to obtain a network element discovery response message fed back by the first network element.

According to a seventh aspect, a network side device is provided, where the network side device includes a processor and a memory, the memory stores a program or an instruction that can be run by the processor, and when the program or the instruction is executed by the processor, the method for determining a user plane function network element according to the first aspect, the second aspect, or the third aspect is implemented.

According to an eighth aspect, a network side device is provided, including a processor and a communication interface, where the communication interface is configured to: transmit a network element registration request message to a first network element, where the network element registration request message is used to register network element information of a user plane function network element to the first network element; and obtain a network element registration response message transmitted by the first network element, where the network element registration request message includes at least one of the following information corresponding to the user plane function network element:
service area information of the user plane function network element;
identification information of a data type supported by the user plane function network element;
information about a session management function network element associated with the user plane function network element;
direct-obtaining capability indication information, where the direct-obtaining capability indication information is used to indicate that the user plane function network element supports a data consumption network element in directly obtaining data from the user plane function network element; and
indirect-obtaining capability indication information, where the indirect-obtaining capability indication information is used to indicate that the user plane function network element supports a data consumption network element in indirectly obtaining data from the user plane function network element by using a session management function network element.

According to a ninth aspect, a network side device is provided, including a processor and a communication interface, where the communication interface is configured to: obtain a network element registration request message transmitted by a user plane function network element, where the network element registration request message is used to register network element information of the user plane function network element to the first network element; and transmit a network element registration response message to the user plane function network element, where the network element registration request message includes at least one of the following information corresponding to the user plane function network element:
service area information of the user plane function network element;
identification information of a data type supported by the user plane function network element;
information about a session management function network element associated with the user plane function network element;
direct-obtaining capability indication information, where the direct-obtaining capability indication information is used to indicate that the user plane function network element supports a data consumption network element in directly obtaining data from the user plane function network element; and
indirect-obtaining capability indication information, where the indirect-obtaining capability indication information is used to indicate that the user plane function network element supports a data consumption network element in indirectly obtaining data from the user plane function network element by using a session management function network element.

According to a tenth aspect, a network side device is provided, including a processor and a communication interface, where the communication interface is configured to: transmit a network element discovery request message to a first network element, where the network element discovery request message includes first information; and obtain a network element discovery response message fed back by the first network element, where the first information is used to determine a target user plane function network element that matches the first information; and the first information includes at least one of the following information:
information about a target area, used to indicate an area of interest to a data consumption network element; and
target data type identification information, used to indicate a data type of interest to a data consumption network element.

According to an eleventh aspect, a system for determining a user plane function network element is provided, including: a user plane function network element, a first network element, and a data consumption network element, where the user plane function network element may be configured to perform the method for determining a user plane function network element according to the first aspect, the first network element may be configured to perform the method for determining a user plane function network element according to the second aspect, and the data consumption network element may be configured to perform the method for determining a user plane function network element according to the third aspect.

According to a twelfth aspect, a readable storage medium is provided, where the readable storage medium stores a program or an instruction, and when the program or the instruction is executed by a processor, the steps of the method according to the first aspect, the steps of the method according to the second aspect, or the steps of the method according to the third aspect are implemented.

According to a thirteenth aspect, a chip is provided, where the chip includes a processor and a communication interface, the communication interface is coupled to the processor, and the processor is configured to run a program or an instruction to implement the steps of the method according to the first aspect, the steps of the method according to the second aspect, or the steps of the method according to the third aspect.

According to a fourteenth aspect, a computer program/program product is provided, where the computer program/program product is stored in a storage medium, and the computer program/program product is executed by at least one processor to implement the steps of the method according to the first aspect, the steps of the method according to the second aspect, or the steps of the method according to the third aspect.

In the embodiments of this application, a network element registration request message includes at least one of the following information corresponding to a user plane function network element: service area information of the user plane function network element, identification information of a data type supported by the user plane function network element, direct-obtaining capability indication information, and indirect-obtaining capability indication information, so that when a data consumption network element requests data of the UPF network element from a first network element, the first network element may determine a corresponding UPF network element based on the foregoing information, and the data consumption network element may obtain data from the corresponding UPF network element.

### BRIEF DESCRIPTION OF THE DRAWINGS

FIG. 1 is a block diagram of a wireless communication system according to an embodiment of this application;
FIG. 2 is a schematic flowchart 1 of a method for determining a user plane function network element according to an embodiment of this application;
FIG. 3 is a schematic diagram 1 of a signaling interaction of a method for determining a user plane function network element according to an embodiment of this application;
FIG. 4 is a schematic diagram 2 of a signaling interaction of a method for determining a user plane function network element according to an embodiment of this application;
FIG. 5 is a schematic flowchart 2 of a method for determining a user plane function network element according to an embodiment of this application;
FIG. 6 is a schematic flowchart 3 of a method for determining a user plane function network element according to an embodiment of this application;
FIG. 7 is a schematic diagram 3 of a signaling interaction of a method for determining a user plane function network element according to an embodiment of this application;
FIG. 8 is a schematic diagram 1 of an apparatus for determining a user plane function network element according to an embodiment of this application;
FIG. 9 is a schematic diagram 2 of an apparatus for determining a user plane function network element according to an embodiment of this application;
FIG. 0 is a schematic diagram 3 of an apparatus for determining a user plane function network element according to an embodiment of this application;

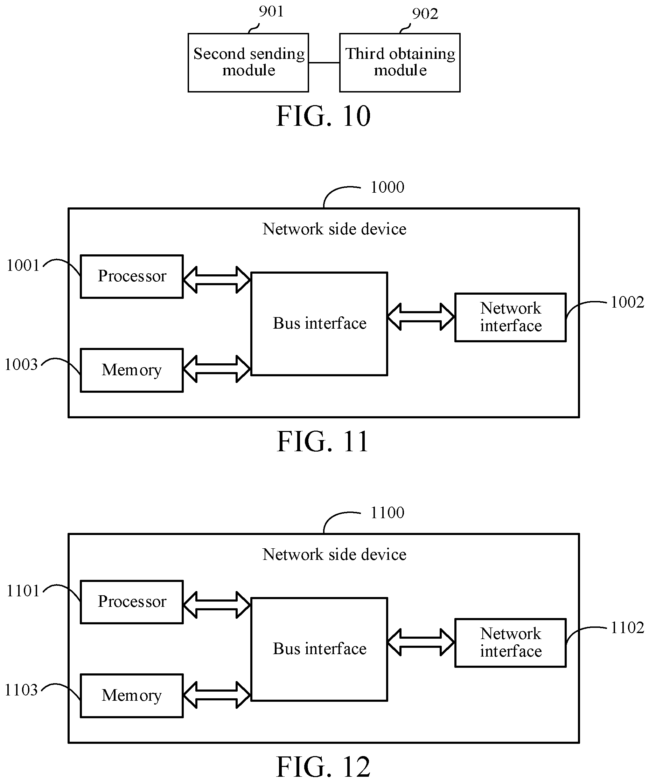

FIG. 11 is a schematic diagram 1 of a structure of a network side device according to an embodiment of this application;
FIG. 12 is a schematic diagram 2 of a structure of a network side device according to an embodiment of this application; and

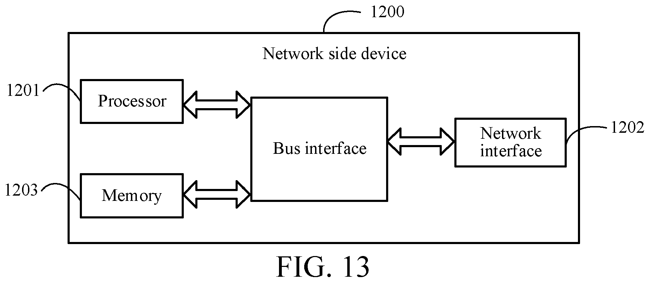

FIG. 13 is a schematic diagram 3 of a structure of a network side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the number of objects is not limited, for example, there may be one or more first objects. In addition, in the specification and claims, "and/or" represents at least one of connected objects, and a character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The described technologies may be applied to both the systems and the radio technologies mentioned above as well as to other systems and radio technologies. The following describes a new radio (New Radio, NR) system for example purposes, and NR terms are used in most of the following descriptions. The technologies can also be applied to applications other than an NR system application, such as a 6th generation (6th Generation, 6G) communication system.

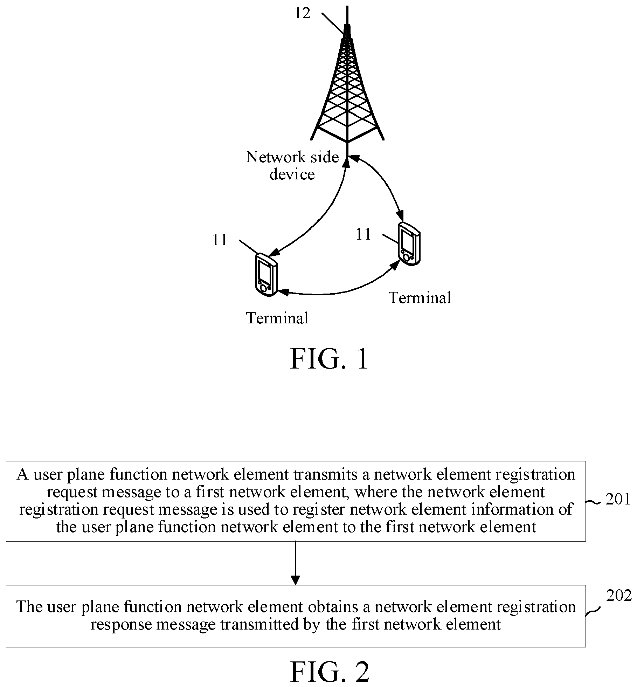

FIG. 1 is a block diagram of a wireless communication system to which the embodiments of this application are applicable. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a washing machine, or furniture), a game console, a personal computer (personal computer, PC), a teller machine, or a self-service machine, and the wearable device includes: a smart watch, a smart band, a smart headset, smart glasses, smart jewelry (a smart bracelet, a smart hand chain, a smart ring, a smart necklace, a smart anklet, a smart ankle chain), a smart wristband, smart clothing, and the like. It should be noted that a specific type of the terminal 11 is not limited in the embodiments of this application. The network side device 12 may include an access network device or a core network device. The access network device 12 may alternatively be referred to as a radio access network device, a radio access network (Radio Access Network, RAN), a radio access network function, or a radio access network unit. The access network device 12 may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

A method and an apparatus for determining a user plane function network element provided in the embodiments of this application are described in detail below with reference to the accompanying drawings based on some embodiments and application scenarios thereof.

FIG. 2 is a schematic flowchart 1 of a method for determining a user plane function network element according to an embodiment of this application. As shown in FIG. 2, this embodiment of this application provides a method for determining a user plane function network element, and the method may be executed by a UPF network element. The method includes the following steps.

Step 201: The user plane function network element transmits a network element registration request message to a first network element, where the network element registration request message is used to register network element information of the user plane function network element to the first network element.

Optionally, the first network element includes a network repository function NRF network element, a session management function SMF network element, a UDM network element, and the like.

When the first network element is an NRF, a specific implementation of a network element registration request is an Nnrf_ NFManagement_ NFRegister service operation request.

The network element registration request message includes the following information:
a network function type (NF type), where the NF type is a UPF, and is used to indicate that a to-be-registered network element type is a UPF type; and
a supported service name (Supported service name), used to indicate a name of a service supported by the UPF, where the supported service includes a UPF event exposure service (Nupf_ EventExposure service).

In addition, the network element registration request message includes at least one of the following information corresponding to the user plane function network element:
information about a data network name (Data Network Name, DNN) that is capable of being served by the user plane function network element;
information about a slice that is capable of being served by the user plane function network element;
information about an SMF area that is capable of being served by the user plane function network element;
IP address information of UE that is capable of being served by the user plane function network element;
service area information of the user plane function network element;
identification information of a data type supported by the user plane function network element;
information about a session management function network element associated with the user plane function network element;
direct-obtaining capability indication information, where the direct-obtaining capability indication information is used to indicate that the user plane function network element supports a data consumption network element in directly obtaining data from the user plane function network element;
indirect-obtaining capability indication information, where the indirect-obtaining capability indication information is used to indicate that the user plane function network element supports a data consumption network element in indirectly obtaining data from the user plane function network element by using a session management function network element;
first indication information, where the first indication information is used to indicate whether the user plane function network element supports an access traffic steering, switching and splitting (Access Traffic Steering, Switching and Splitting, ATSSS) service; and
second indication information, where the second indication information is used to indicate whether the user plane function network element supports an event exposure service (for example, a UPF event exposure service).

In an implementation, the data network name (Data Network Name, DNN) that is capable of being served by the user plane function network element may be one or more DNNs.

In an implementation, the information about the slice that is capable of being served by the user plane function network element includes one or more pieces of single network slice selection assistance information (Single Network Slice Selection Assistance Information, S-NSSAI), and one piece of S-NSSAI is used to identify one slice.

In an implementation, the information about the SMF area that is capable of being served by the user plane function network element includes an SMF area identity (SMF Area Identity).

In an implementation, the IP address information of the UE that is capable of being served by the user plane function network element is used to indicate an IP address range of the UE that is capable of being served by the user plane function network element.

Specifically, the service area information of the user plane function network element is used to indicate an area range in which the UPF provides a service, and may be a tracking area(s) (TA(s)), a cell(s) (cell(s)), or another form of expression.

Specifically, the identification information of the data type supported by the UPF network element is used to indicate a data type supported by the UPF, such as a quality of service flow bit rate (QoS flow Bit Rate) measurement value or a quality of service flow packet delay (QoS flow Packet Delay) measurement value. Optionally, the data consumption network element includes an NWDAF network element, an AF, a PCF network element, and the like.

In an implementation, the information about the session management function network element associated with the user plane function network element includes at least one of the following:
an identifier of the session management function network element;
an identifier of a service area of the session management function network element;
an address of the session management function network element, for example, an Internet Protocol (Internet Protocol, IP) address; and
a fully qualified domain name (Fully Qualified Domain Name, FQDN) of the session management function network element. In an implementation, association between the user plane function network element and the session management function network element may indicate that the user plane function network element is controlled by the session management function network element, or the user plane function network element falls within a service range of the session management function network element.

Step 202: The user plane function network element obtains a network element registration response message transmitted by the first network element.

Specifically, after obtaining the network element registration request message transmitted by the user plane function network element, the first network element transmits the network element registration response message to the user plane function network element, and the user plane function network element obtains the network element registration response message transmitted by the first network element. The network element registration response message is used to indicate whether the user plane function network element is successfully registered or fails to be registered.

In this embodiment of this application, the network element registration request message includes at least one of the following information corresponding to the user plane function network element: the service area information of the user plane function network element, the identification information of the data type supported by the user plane function network element, the direct-obtaining capability indication information, and the indirect-obtaining capability indication information, so that when the data consumption network element requests data of the UPF network element from the first network element, the first network element may determine the corresponding UPF network element based on the foregoing information, and the data consumption network element may obtain the data from the corresponding UPF network element.

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

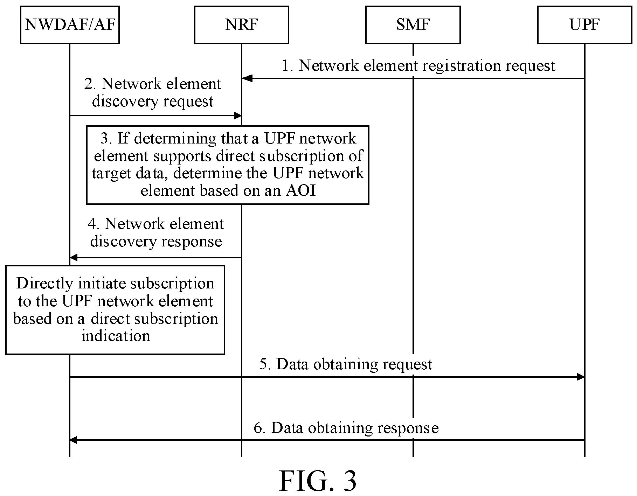

Specifically, FIG. 3 is a schematic diagram 1 of a signaling interaction of a method for determining a user plane function network element according to an embodiment of this application. As shown in FIG. 3, this embodiment of this application provides a solution of directly obtaining data from a UPF network element.

During network element registration, a network element registration request message includes first data type identification information.

The first data type identification information may be represented by a field event ID(s), and is used to indicate a data type identification that supports direct obtaining. That is, if intending to obtain data corresponding to data types from the UPF network element, another network element can directly initiate a data obtaining request to the UPF network element.

It should be noted that, data obtaining in this application may be performed in real time or through subscription. For the obtaining performed through subscription, subscription-related information such as a time point or a time period for obtaining data may be agreed upon in advance.

In this embodiment of this application, the data is directly obtained from the UPF network element, thereby increasing data obtaining efficiency and reducing a data obtaining delay.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

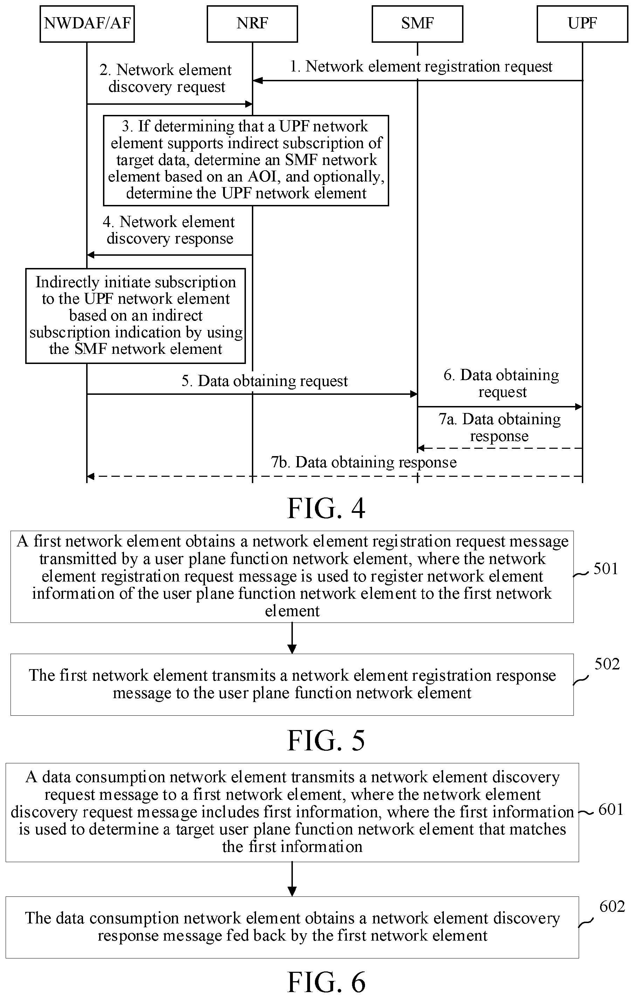

Specifically, FIG. 4 is a schematic diagram 2 of a signaling interaction of a method for determining a user plane function network element according to an embodiment of this application. As shown in FIG. 4, this embodiment of this application provides a solution of indirectly obtaining data from a UPF network element.

During network element registration, a network element registration request message includes second data type identification information.

The second data type identification information may be represented by a field event ID(s), and is used to indicate a data type identification that supports indirect obtaining. That is, if intending to obtain data corresponding to data types from the UPF network element, another network element may initiate a data obtaining request to the UPF network element by using an SMF network element. It should be noted that, although the data obtaining request is transmitted by using the SMF network element, a data obtaining response may or may not pass through the SMF network element.

In this embodiment of this application, the data is indirectly obtained from the UPF network element, thereby increasing a possibility that data obtaining is controlled by the SMF network element.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Specifically, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

The information about the SMF network element associated with the user plane function network element includes at least one of the following:
an identifier of a service area of the SMF network element;
an identifier of an instance (instance) corresponding to the SMF network element;
an address of the instance corresponding to the SMF network element, for example, an Internet Protocol (Internet Protocol, IP) address; and
a fully qualified domain name (Fully Qualified Domain Name, FQDN) of the SMF network element.

In this embodiment of this application, the data is indirectly obtained from the UPF network element, thereby increasing a possibility that data obtaining is controlled by the SMF network element.

FIG. 5 is a schematic flowchart 2 of a method for determining a user plane function network element according to an embodiment of this application. As shown in FIG. 5, this embodiment of this application provides a method for determining a user plane function network element, and the method may be executed by a first network element, such as an NRF network element, an SMF network element, or a UDM network element. The method includes the following steps.

Step 501: The first network element obtains a network element registration request message transmitted by a user plane function network element, where the network element registration request message is used to register network element information of the user plane function network element to the first network element.

The network element registration request message includes at least one of the following information corresponding to the user plane function network element:
information about a data network name (Data Network Name, DNN) that is capable of being served by the user plane function network element;
information about a slice that is capable of being served by the user plane function network element;
information about an SMF area that is capable of being served by the user plane function network element;
IP address information of UE that is capable of being served by the user plane function network element;
service area information of the user plane function network element;
identification information of a data type supported by the user plane function network element;
information about a session management function network element associated with the user plane function network element;
direct-obtaining capability indication information (Direct event exposure indication), where the direct-obtaining capability indication information is used to indicate that the user plane function network element supports a data consumption network element in directly obtaining data from the user plane function network element;
indirect-obtaining capability indication information (indirect event exposure indication), where the indirect-obtaining capability indication information is used to indicate that the user plane function network element supports a data consumption network element in indirectly obtaining data from the user plane function network element by using a session management function network element;
first indication information, where the first indication information is used to indicate whether the user plane function network element supports an access traffic steering, switching and splitting (Access Traffic Steering, Switching and Splitting, ATSSS) service; and
second indication information, where the second indication information is used to indicate whether the user plane function network element supports an event exposure service (for example, a UPF event exposure service).

Step 502: The first network element transmits a network element registration response message to the user plane function network element.

Specifically, for the method for determining a user plane function network element provided in this embodiment of this application, refer to the method embodiment executed by the UPF network element, and a same technical effect can be achieved. Repeated parts are no longer described in this embodiment of this application.

In this embodiment of this application, the network element registration request message includes at least one of the following information corresponding to the user plane function network element: the service area information of the user plane function network element, the identification information of the data type supported by the user plane function network element, the direct-obtaining capability indication information, and the indirect-obtaining capability indication information, so that when the data consumption network element requests data of the UPF network element from the first network element, the first network element may determine the corresponding UPF network element based on the foregoing information, and the data consumption network element may obtain data from the corresponding UPF network element.

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

Specifically, for the method for determining a user plane function network element provided in this embodiment of this application, refer to the method embodiment executed by the UPF network element, and a same technical effect can be achieved. Repeated parts are no longer described in this embodiment of this application.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

Specifically, for the method for determining a user plane function network element provided in this embodiment of this application, refer to the method embodiment executed by the UPF network element, and a same technical effect can be achieved. Repeated parts are no longer described in this embodiment of this application.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Specifically, there may be one or more SMF network elements associated with the UPF network element. When there are a plurality of SMF network elements associated with the UPF network element, different SMF network elements correspond to different second data type identification information, and are used to indicate that data corresponding to the different second data type identification information needs to be obtained by using the corresponding SMF network elements.

Specifically, for the method for determining a user plane function network element provided in this embodiment of this application, refer to the method embodiment executed by the UPF network element, and a same technical effect can be achieved. Repeated parts are no longer described in this embodiment of this application.

Optionally, the method further includes:
obtaining, by the first network element, a network element discovery request message transmitted by the data consumption network element, where the network element discovery request message includes first information, where the first information includes at least one of the following information:
information about a target area, used to indicate an area of interest (area of interest, AOI) to the data consumption network element, for example, the AOI may be a TA, a cell, or another form of expression;
target data type identification information (event ID), used to indicate a data type of interest to the data consumption network element, such as a QoS flow bit rate or a QoS flow packet delay;
information about a target DNN;
information about a target slice;
information about a target SMF area;
IP address information of target UE;
third indication information, where the third indication information is used to indicate that the data consumption network element requires a user plane function network element supporting an event exposure service; and
fourth indication information, where the fourth indication information is used to indicate that the data consumption network element requires a user plane function network element supporting an ATSSS service.

In an optional implementation, the information about the target DNN may be information about a DNN corresponding to a service of the data consumption network element, or the information about the target DNN may be information about a DNN of interest to the data consumption network element.

In an optional implementation, the information about the target slice may be information about a slice of interest to the data consumption network element, and the information about the target slice includes target S-NSSAI.

In an optional implementation, the information about the target SMF area may be information about an SMF area of interest to the data consumption network element, and the information about the target SMF area includes a target SMF area identity (SMF Area Identity).

In an optional implementation, the IP address information of the target UE may be IP address information of UE of interest to the data consumption network element.

In an optional implementation, the target DNN may be one or more DNNs, the target slice may be one or more slices, the target SMF area identity may be one or more SMF area identities, and the IP address information of the target UE may be IP addresses of one or more UEs.

The first network element determines, based on the network element discovery request message, a target user plane function network element that matches the first information; and
the first network element transmits a network element discovery response message to the data consumption network element.

Specifically, the data consumption network element (such as an NWDAF or an AF) transmits a network element discovery request to the NRF network element, to obtain information about a UPF network element that can provide to-be-requested data.

The information about the UPF network element includes at least one of the following information:
an identifier of a service area of the UPF network element;
an identifier of an instance corresponding to the UPF network element, for example, an FQDN; and
an address of an instance corresponding to the UPF network element, for example, an IP address.

Specifically, when the first network element is an NRF, a specific implementation of the network element discovery request may be an Nnrf_NFDiscovery_Request service operation request.

Specifically, the network element discovery request message includes second information, and the second information includes at least one of the following:
an NF type, where the NF type is a UPF, and is used to indicate that a network element type requested for discovery is a UPF type;
a supported service name, including a UPF event exposure service UPF event exposure (Nupf_EventExposure service, and used to indicate that a UPF requested for discovery needs to support the event exposure service;
information about a target area, used to indicate an area of interest (area of interest, AOI) to the data consumption network element, where the AOI may be a TA(s), a cell(s), or another form of expression, and is used to indicate a request to discover the UPF network element in the area of interest, that is, the obtained UPF network element may serve the area of interest; and
target data type identification information, used to indicate a data type of interest to the data consumption network element, where after obtaining the network element discovery request message, the first network element determines, based on the network element discovery request message, a target user plane function network element that matches the first information; and it should be noted that, there may be one or more determined target user plane function network elements.

Optionally, the determining a target user plane function network element that matches the first information includes:
determining, by the first network element, the target user plane function network element based on the information about the target area included in the first information, where a service area of the target user plane function network element matches the target area; and/or
determining, by the first network element, the target user plane function network element based on the information about the target area included in the first information, where a service area of a session management function network element associated with the target user plane function network element matches the target area; and/or
determining, by the first network element, the target user plane function network element based on the target data type identification information included in the first information, where the target user plane function network element is capable of providing data corresponding to the target data type identification information; and/or
determining, by the first network element, the target user plane function network element based on the information about the target DNN included in the first information, where information about a DNN that is capable of being served by the target user plane function network element matches the information about the target DNN; and/or
determining, by the first network element, the target user plane function network element based on the information about the target slice included in the first information, where information about a slice that is capable of being served by the target user plane function network element matches the information about the target slice; and/or
determining, by the first network element, the target user plane function network element based on the information about the target SMF area included in the first information, where information about an SMF area that is capable of being served by the target user plane function network element matches the information about the target SMF area; and/or
determining, by the first network element, the target user plane function network element based on the IP address information of the target UE included in the first information, where IP address information of UE that is capable of being served by the target user plane function network element matches the IP address information of the target UE;
determining, by the first network element, the target user plane function network element based on the third indication information included in the first information, where the target user plane function network element supports an event exposure service; and/or
determining, by the first network element, the target user plane function network element based on the fourth indication information included in the first information, where the target user plane function network element supports an ATSSS service.

Specifically, after the first network element obtains the network element discovery request message, a feasible solution is: determining, by the first network element, the target user plane function network element based on the target area included in the first information, where a service area of the target user plane function network element matches the target area.

That a service area of the target user plane function network element matches the target area includes at least one of the following cases:
the service area of the target UPF network element is the same as the AOI;
the AOI is a sub-area of the service area of the target UPF network element; and
the service area of the UPF network element is a sub-area of the AOI.

For example, an NRF determines, based on NF type=UPF type included in a network element discovery request, that a network element instance to be discovered is of a UPF type; the NRF performs matching based on an Nupf_EventExposure service included in the network element discovery request, to obtain that the UPF network element instance can support the Nupf_EventExposure service; and the NRF performs matching based on a requested event ID, to obtain that the UPF network element instance supports exposure of data corresponding to the event ID. In an implementation, if the NRF has saved service area information of the UPF, the NRF can directly perform matching on the UPF network element instance, and a service area of the UPF network element includes the AOI or is included by the AOI. In another implementation, the NRF can first perform matching based on a service area of an SMF associated with the UPF, to obtain an SMF that can serve the AOI, and then use, as a target UPF network element instance to be discovered, one or more UPF network elements associated with the SMF.

Another feasible solution is: determining, by the first network element, the target user plane function network element based on the target data type identification information included in the first information, where the target user plane function network element is capable of providing data corresponding to the target data type identification information.

In an optional implementation, that information about a DNN that is capable of being served by the target user plane function network element matches the information about the target DNN includes at least one of the following cases:
the DNN that is capable of being served by the target user plane function network element is the same as the target DNN;
the target DNN is a subset of the DNN that is capable of being served by the target user plane function network element; and
the DNN that is capable of being served by the target user plane function network element is a subset of the target DNN.

In an optional implementation, that information about a slice that is capable of being served by the target user plane function network element matches the information about the target slice includes at least one of the following cases:
the slice that is capable of being served by the target user plane function network element is the same as the target slice;
the target slice is a subset of the slice that is capable of being served by the target user plane function network element; and
the slice that is capable of being served by the target user plane function network element is a subset of the target slice.

In an optional implementation, that information about an SMF area that is capable of being served by the target user plane function network element matches the information about the target SMF area includes at least one of the following cases:
the information about the SMF area that is capable of being served by the target user plane function network element is the same as the information about the target SMF area;
the information about the target SMF area is a subset of the information about the SMF area that is capable of being served by the target user plane function network element; and
the information about the SMF area that is capable of being served by the target user plane function network element is a subset of the information about the target SMF area.

In an optional implementation, if the first information includes a plurality of pieces of information, the target user plane function network element is a user plane function network element that matches the plurality of pieces of information included in the first information. For example, if the first information includes information about a DNN and third indication information, the target user plane function network element supports an event exposure service, and the information about the DNN that is capable of being served by the target user function network element matches the information about the target DNN. For another example, if the first information includes the information about the target slice and fourth indication information, the target user plane function network element supports an ATSSS service, and the information about the slice that is capable of being served by the target user plane function network element matches the information about the target slice. Other combinations are no longer described one by one.

In this embodiment of this application, the first network element can determine the corresponding UPF network element based on the target area and/or the target data type identification information included in the first information, and enable the data consumption network element to obtain data from the corresponding UPF network element.

In an implementation, the first network element includes: the session management function network element or a network repository function network element.

In an implementation, the first network element includes a network repository function network element, and the data consumption network element includes a network data analytics function network element or an application function network element; or
the first network element includes the session management function network element, and the data consumption network element includes a network data analytics function network element or an application function network element; or
the first network element includes a network repository function network element, and the data consumption network element includes the session management function network element.

It should be noted that, the session management function network element is a network element with a session management function, for example, the session management function network element is an SMF. The network repository function network element is a network element with a network repository function, for example, the network repository function network element is an NRF. The network data analytics function network element is a network element with a network data analytics function, for example, the network data analytics function network element is an NWDAF. The application function network element may be an AF.

After determining the target UPF network element, the first network element transmits a network element discovery response message to the data consumption network element.

Specifically, when the first network element is an NRF, an implementation of the network element discovery response message is output information corresponding to an Nnrf_NFDiscovery_Request service operation.

In an implementation, the network element discovery response message includes at least one of the following: information about the target user plane function network element and information about the session management function network element associated with the target user plane function network element.

In an implementation, the information about the target user plane function network element includes at least one of the following:
an identifier of the target user plane function network element;
an FQDN of the target user plane function network element;
an IP address of the target user plane function network element; and
profile (profile) information of the target user plane function network element.

The profile (profile) information of the target user plane function network element includes at least one of the following:
service area information of the target user plane function network element;
information about an event ID supported by the target user plane function network element; and
service name information supported by the target user plane function network element.

In an implementation, the information about the session management function network element associated with the target user plane function network element includes at least one of the following:
an identifier of the session management function network element;
an FQDN of the session management function network element;
an IP address of the session management function network element; and
profile (profile) information of the session management function network element.

The profile (profile) information of the session management function network element includes at least one of the following:
service area information of the session management function network element;
information about an event ID supported by the session management function network element; and
service name information supported by the session management function network element.

Optionally, the method further includes:
determining, by the first network element based on the target data type identification, that the target user plane function network element supports directly obtaining the data corresponding to the target data type identification information.

Specifically, after obtaining the network element discovery request message, the first network element determines, based on the target data type identification information in the network element discovery request message, whether the target UPF network element supports directly obtaining the data corresponding to the target data type identification information.

In this embodiment of this application, the first network element determines, based on the target data type identification, that the target UPF network element supports directly obtaining the data corresponding to the target data type identification information.

Optionally, the network element discovery response message includes direct-obtaining capability indication information, and the direct-obtaining capability indication information is used to indicate that the target user plane function network element supports the data consumption network element in directly obtaining data from the target user plane function network element.

Specifically, when the first network element determines, based on the target data type identification, that the target UPF network element supports directly obtaining the data corresponding to the target data type identification information, the network element discovery response message fed back by the first network element to the data consumption network element includes the direct-obtaining capability indication information; and
the direct-obtaining capability indication information is used to indicate that the target user plane function network element supports the data consumption network element in directly obtaining data from the target user plane function network element.

In this embodiment of this application, the direct-obtaining capability indication information in the network element discovery response message indicates that the data consumption network element directly obtains data from the UPF network element, thereby increasing data obtaining efficiency and reducing a data obtaining delay.

Optionally, the network element discovery response message includes an identifier or address information of the target user plane function network element.

Specifically, in this embodiment of this application, the network element discovery response message includes an identifier or address information of the target user plane function network element.

In a case of directly obtaining data, the data consumption network element may directly request the data from the target user plane function network element.

In a case of indirectly obtaining data, the data consumption network element may transmit the identifier or address information of the target user plane function network element to the SMF network element, and then the SMF network element requests the data from the target user plane function network element.

It should be noted that, there may be one or more target user plane function network elements included in the network element discovery response message.

Specifically, for the method for determining a user plane function network element provided in this embodiment of this application, refer to the method embodiment executed by the UPF network element, and a same technical effect can be achieved. Repeated parts are no longer described in this embodiment of this application.

Optionally, the method further includes:
determining, by the first network element based on the target data type identification information, that the target user plane function network element supports indirectly obtaining the data corresponding to the target data type identification information.

Specifically, after obtaining the network element discovery request message, the first network element determines, based on the target data type identification information in the network element discovery request message, whether the target UPF network element supports indirectly obtaining the data corresponding to the target data type identification information.

In this embodiment of this application, the first network element determines, based on the target data type identification, that the target UPF network element supports indirectly obtaining the data corresponding to the target data type identification information.

Optionally, the network element discovery response message includes indirect-obtaining capability indication information, and the indirect-obtaining capability indication information is used to indicate that the target user plane function network element supports the data consumption network element in indirectly obtaining data from the target user plane function network element by using the session management function network element.

Specifically, when the first network element determines, based on the target data type identification, that the target UPF network element supports indirectly obtaining the data corresponding to the target data type identification information, the network element discovery response message fed back by the first network element to the data consumption network element includes indirect-obtaining capability indication information; and
the indirect-obtaining capability indication information is used to indicate that the target user plane function network element supports the data consumption network element in indirectly obtaining data from the target user plane function network element by using the session management function network element.

In this embodiment of this application, the indirect-obtaining capability indication information in the network element discovery response message indicates that the data consumption network element indirectly obtains the data from the UPF network element, thereby increasing a possibility that data obtaining is controlled by the SMF network element.

Optionally, the network element discovery response message includes information about a target session management function network element associated with the target user plane function network element.

Optionally, the network element discovery response message includes an identifier or address information of the target user plane function network element. Specifically, for the method for determining a user plane function network element provided in this embodiment of this application, refer to the method embodiment executed by the UPF network element, and a same technical effect can be achieved. Repeated parts are no longer described in this embodiment of this application.

FIG. 6 is a schematic flowchart 3 of a method for determining a user plane function network element according to an embodiment of this application. As shown in FIG. 6, this embodiment of this application provides a method for determining a user plane function network element, and the method may be executed by a data consumption network element, such as an NWDAF network element, an AF, or a PCF network element. The method includes the following steps.

Step 601: The data consumption network element transmits a network element discovery request message to a first network element, where the network element discovery request message includes first information, where the first information is used to determine a target user plane function network element that matches the first information; and the first information includes at least one of the following information:
information about a target area, used to indicate an area of interest to the data consumption network element;
target data type identification information, used to indicate a data type of interest to the data consumption network element;
information about a target DNN;
information about a target slice;
information about a target SMF area;
IP address information of target UE;
third indication information, where the third indication information is used to indicate that the data consumption network element requires a user plane function network element supporting an event exposure service; and
fourth indication information, where the fourth indication information is used to indicate that the data consumption network element requires a user plane function network element supporting an ATSSS service.

Step 602: The data consumption network element obtains a network element discovery response message fed back by the first network element.

Specifically, for the method for determining a user plane function network element provided in this embodiment of this application, refer to the method embodiment executed by the UPF network element and/or the first network element, and a same technical effect can be achieved. Repeated parts are no longer described in this embodiment of this application.

Optionally, a service area of the target user plane function network element matches the target area; and/or
a service area of a session management function network element associated with the target user plane function network element matches the target area; and/or
the target user plane function network element is determined by the first network element based on the target data type identification information included in the first information, and the target user plane function network element is capable of providing data corresponding to the target data type identification information; and/or
information about a DNN that is capable of being served by the target user plane function network element matches the information about the target DNN; and/or
information about a slice that is capable of being served by the target user plane function network element matches the information about the target slice; and/or
information about an SMF area that is capable of being served by the target user plane function network element matches the information about the target SMF area; and/or
IP address information of UE that is capable of being served by the target user plane function network element matches the IP address information of the target UE; and/or
the target user plane function network element supports an event exposure service; and/or
the target user plane function network element supports an ATSSS service.

Specifically, for the method for determining a user plane function network element provided in this embodiment of this application, refer to the method embodiment executed by the UPF network element and/or the first network element, and a same technical effect can be achieved. Repeated parts are no longer described in this embodiment of this application.

In an implementation, the network element discovery response message includes at least one of the following: information about the target user plane function network element and information about the session management function network element associated with the target user plane function network element.

Optionally, the network element discovery response message includes direct-obtaining capability indication information, and the direct-obtaining capability indication information is used to indicate that the target user plane function network element supports the data consumption network element in directly obtaining data from the user plane function network element.

Specifically, for the method for determining a user plane function network element provided in this embodiment of this application, refer to the method embodiment executed by the UPF network element and/or the first network element, and a same technical effect can be achieved. Repeated parts are no longer described in this embodiment of this application.

Optionally, the network element discovery response message includes an identifier or address information of the target user plane function network element.

Specifically, the network element discovery response message includes information about a UPF network element. The information about the UPF network element includes at least one of the following information:
an identifier of a service area of the UPF network element;
an identifier of an instance corresponding to the UPF network element, for example, an FQDN; and
an address of an instance corresponding to the UPF network element, for example, an IP address.

Specifically, for the method for determining a user plane function network element provided in this embodiment of this application, refer to the method embodiment executed by the UPF network element and/or the first network element, and a same technical effect can be achieved. Repeated parts are no longer described in this embodiment of this application.

Optionally, the method further includes:
directly transmitting, by the data consumption network element, a data obtaining request message to the target user plane function network element; and
obtaining, by the data consumption network element, a data obtaining response message transmitted by the target user plane function network element, where the data obtaining response message includes target data corresponding to the data obtaining request message.

Specifically, when the network element discovery response message includes direct-obtaining capability indication information, the data consumption network element directly transmits a data obtaining request message to the target user plane function network element.

A specific implementation of the data obtaining request message is an Nupf_EventExposure_Subscribe service operation request.

The data obtaining request message includes at least one of the following information:
target data type identification information (event ID), indicating a to-be-obtained data type;
a target data filter (Event filter), used to limit a to-be-obtained data range, such as a time range or an area range;
a target data object (Event target), used to indicate a source object of to-be-obtained data, such as single specific UE, a specific UE group, or any UE;
target data reporting information (Event reporting information), used to limit a condition (event triggering or periodic triggering), a format (reporting based on a maximum value, aggregation reporting, or the like), a manner (performing reporting once, performing reporting a plurality of times, or the like), or the like of a data feedback; and
a notification target address (Notification target address), used to indicate a destination address to which data is reported, for example, the notification target address herein may be set to an address of a data message network element, or an address of another destination network element.

After collecting data on demand, the UPF network element feeds back the data to the destination address specified by the data consumption network element.

Specifically, the UPF network element may transmit the data obtaining response message to the data consumption network element, and the data obtaining response message includes the target data corresponding to the data obtaining request message, that is, a data result corresponding to the event ID and another piece of limiting information.

A specific implementation of the feedback message is an Nupf_EventExposure_Notify service operation.

In this embodiment of this application, the direct-obtaining capability indication information in the network element discovery response message indicates that the data consumption network element directly obtains the data from the UPF network element, thereby increasing data obtaining efficiency and reducing a data obtaining delay.

Optionally, the network element discovery response message includes indirect-obtaining capability indication information, and the indirect-obtaining capability indication information is used to indicate that the target user plane function network element supports the data consumption network element in indirectly obtaining data from the user plane function network element by using the session management function network element.

Specifically, for the method for determining a user plane function network element provided in this embodiment of this application, refer to the method embodiment executed by the UPF network element and/or the first network element, and a same technical effect can be achieved. Repeated parts are no longer described in this embodiment of this application.

Optionally, the network element discovery response message includes information about a target session management function network element associated with the target user plane function network element.

Specifically, the network element discovery response message includes information about an SMF network element associated with the user plane function network element. The information about the SMF network element associated with the user plane function network element includes at least one of the following:
an identifier of a service area of the SMF network element;
an identifier of an instance (instance) corresponding to the SMF network element;
an address of the instance corresponding to the SMF network element, for example, an Internet Protocol (Internet Protocol, IP) address; and
a fully qualified domain name (Fully Qualified Domain Name, FQDN) of the SMF network element.

Specifically, for the method for determining a user plane function network element provided in this embodiment of this application, refer to the method embodiment executed by the UPF network element and/or the first network element, and a same technical effect can be achieved. Repeated parts are no longer described in this embodiment of this application.

Optionally, the method further includes:
transmitting, by the data consumption network element, a data obtaining request message to the target session management function network element; and
obtaining, by the data consumption network element, a data obtaining response message transmitted by the target session management function network element or the user plane function network element, where the data obtaining response message includes target data corresponding to the data obtaining request message.

Specifically, when the network element discovery response message includes indirect-obtaining capability indication information, the data consumption network element indirectly transmits a data obtaining request message to the target user plane function network element.

First, the data consumption network element initiates a data obtaining request to an SMF.

The data obtaining request message includes at least one of the following information:
target data type identification information (event ID), indicating a to-be-obtained data type;
a target data filter (Event filter), used to limit a to-be-obtained data range, such as a time range or an area range;
a target data object (Event target), used to indicate a source object of to-be-obtained data, such as single specific UE, a specific UE group, or any UE;
target data reporting information (Event reporting information), used to limit a condition (event triggering or periodic triggering), a format (reporting based on a maximum value, aggregation reporting, or the like), a manner (performing reporting once, performing reporting a plurality of times, or the like), or the like of a data feedback; and
a notification target address (Notification target address), used to indicate a destination address to which data is reported, for example, the notification target address herein may be set to an address of a data message network element, or an address of another destination network element.

Optionally, the data obtaining request message includes the information about the UPF network element. The information about the UPF network element includes at least one of the following information:
an identifier of a service area of the UPF network element;
an identifier of an instance corresponding to the UPF network element, for example, an FQDN; and
an address of an instance corresponding to the UPF network element, for example, an IP address.

Optionally, the data obtaining request message includes a UPF data collection indication (UPF data collection indication), used to indicate that the message is used to obtain data from the UPF network element.

Then, the SMF network element initiates a data obtaining request to the UPF network element to obtain data requested by the data consumption network element.

The data obtaining request message transmitted by the SMF network element to the UPF network element includes at least one of the following information:
target data type identification information (event ID), indicating a to-be-obtained data type;
a target data filter (Event filter), used to limit a to-be-obtained data range, such as a time range or an area range;
a target data object (Event target), used to indicate a source object of to-be-obtained data, such as single specific UE, a specific UE group, or any UE;
target data reporting information (Event reporting information), used to limit a condition (event triggering or periodic triggering), a format (reporting based on a maximum value, aggregation reporting, or the like), a manner (performing reporting once, performing reporting a plurality of times, or the like), or the like of a data feedback; and
a notification target address (Notification target address), used to indicate a destination address to which data is reported, for example, the notification target address herein may be set to an address of a data message network element (for example, an address of an SMF), or an address of another destination network element (for example, an address of the data consumption network element).

After collecting data on demand, the UPF network element feeds back the data to the destination address specified by the data consumption network element.

Specifically, in an implementation, the destination address is an address of the SMF network element, meaning that the data needs to be transferred to the data consumption network element through the SMF network element; and in another implementation, the destination address is the address of the data consumption network element, meaning that the data is directly transmitted to the data consumption network element

In an embodiment, the data consumption network element includes a network data analytics function network element or an application function network element, and the first network element includes the session management function network element; or
the data consumption network element includes a network data analytics function network element or an application function network element, and the first network element includes a network repository function network element; or
the data consumption network element includes the session management function network element, and the first network element includes a network repository function network element.

It should be noted that, the session management function network element is a network element with a session management function, for example, the session management function network element is an SMF. The network repository function network element is a network element with a network repository function, for example, the network repository function network element is an NRF. The network data analytics function network element is a network element with a network data analytics function, for example, the network data analytics function network element is an NWDAF. The application function network element may be an AF.

In an optional implementation, when the data consumption network element includes the session management function network element, and the first network element includes the network repository function network element, the method further includes:
receiving, by the data consumption network element, a network element information obtaining request transmitted by a second network element, where the network element information obtaining request includes third information; and the third information is used to determine a user plane function network element that matches the third information; and transmitting, by the data consumption network element, a network element information obtaining response to the second network element, where the network element information obtaining response includes the information about the target user plane function network element; and
the third information includes at least one of the following:
   information about a first target area, used to indicate an area of interest to the second network element;
   first target data type identification information, used to indicate a data type of interest to the second network element; and
   information about a first target DNN;
   information about a first target slice;
   information about a first target SMF area;
   IP address information of first target UE;
   fifth indication information, where the fifth indication information is used to indicate that the second network element requires a user plane function network element supporting an event exposure service; and
   sixth indication information, where the sixth indication information is used to indicate that the second network element requires a user plane function network element supporting an ATSSS service.

In an implementation, the second network element may be a network data analytics function network element (an NWDAF network element) or an application function network element (an AF network element).

In an implementation, the data consumption network element determines the first information based on the third information. Each item in the first information may be the same as or different from information corresponding to the third information. This is not limited in this embodiment. For example, the first information transmitted by the second network element to the data consumption network element (the SMF network element) includes an area of interest to the second network element, such as a TA1, a TA2, and a TA3. The data consumption network element determines, based on the first information, that the TA1 and the TA2 are of interest, and in this case, the information about the target area in the first information may be the TA1 and the TA2. The data consumption network element determines, based on the first information, that all the TA1, the TA2, and the TA3 are of interest, and in this case, the information about the target area in the first information may be the TA1, the TA2, and the TA3.

In this embodiment of this application, the indirect-obtaining capability indication information in the network element discovery response message indicates that the data consumption network element indirectly obtains the data from the UPF network element, thereby increasing a possibility that data obtaining is controlled by the SMF network element.

The following further describes the method for determining a user plane function network element in the foregoing embodiment by using two specific application scenarios as examples:
1. Directly obtain data from the UPF network element.
   FIG. 3 is a schematic diagram 1 of a signaling interaction of a method for determining a user plane function network element according to an embodiment of this application. As shown in FIG. 3, the signaling interaction includes the following steps.
   1. The UPF network element initiates a network element registration request (a UPF type, a supported service name, and a UPF service area, (an indirect exposure, event IDs, and an SMF ID/a service area), and (a direct exposure and event IDs)) to an NRF network element. The network element registration request is used to register network element information of the UPF network element to the NRF network element.
   2. An NWDAF/AF network element initiates a network element discovery request (a UPF type, an AOI, and an event ID) to the NRF network element.
   3. If determining that the UPF network element supports direct subscription of the event ID, the NRF network element determines a UPF network element instance(s) based on the AOI.
   4. The NRF network element feeds back a network element discovery response (the UPF network element instance(s) and a direct event exposure indication).
      The NWDAF/AF network element determines, based on the direct event exposure indication, to execute direct subscription.
   5. The NWDAF/AF network element initiates a data obtaining request (the event ID, an event filter, a target of an event, and the like) to the UPF network element.
   6. The UPF network element feeds back a data obtaining response (the event ID and the data (data)).
      In this scenario, the data is directly obtained from the UPF network element, thereby increasing data obtaining efficiency and reducing a data obtaining delay.
2. Indirectly obtain data from the UPF network element.
   FIG. 4 is a schematic diagram 2 of a signaling interaction of a method for determining a user plane function network element according to an embodiment of this application. As shown in FIG. 4, the signaling interaction includes the following steps.
   1. The UPF network element initiates a network element registration request (a UPF type, a supported service name, and a UPF service area, (an indirect exposure, event IDs, and an SMF ID/a service area), and (a direct exposure and event IDs)) to an NRF network element. The network element registration request is used to register network element information of the UPF network element to the NRF network element.
   2. An NWDAF/AF network element initiates a network element discovery request (a UPF type, an AOI, and an event ID) to the NRF network element.
   3. If determining that the UPF network element supports indirect subscription of the event ID, the NRF network element determines an ID of an SMF network element based on the AOI, and optionally, determines a UPF network element instance(s).
   4. The NRF network element feeds back a network element discovery response (the ID of the SMF network element, the UPF network element instance(s), and an indirect event exposure indication).
      The NWDAF/AF network element determines, based on the indirect event exposure indication, to execute indirect subscription.
   5. The NWDAF/AF network element initiates a data obtaining request (the UPF network element instance(s), a UPF data collection indication, an event ID, an event filter, a target of an event, and the like) to the SMF network element.
   6. The SMF network element executes an Nupf_EventExposure_Subscribe service operation request (an event ID, an event filter, a target of an event, and a notification target address (an SMF address or a UPF address)).
   7a. The UPF network element feeds back a data obtaining response (an event ID and data) to the SMF network element.
   7b. The UPF network element feeds back a data obtaining response (an event ID and data) to the NWDAF/AF network element.

In this embodiment of this application, the data is indirectly obtained from the UPF network element, thereby increasing data obtaining efficiency and reducing a data obtaining delay.

The method for determining a user plane function network element provided in this embodiment of this application may be executed by an apparatus for determining a user plane function network element. In the embodiments of this application, the apparatus for determining a user plane function network element provided in the embodiments of this application is described by using an example in which the apparatus for determining a user plane function network element performs the method for determining a user plane function network element.

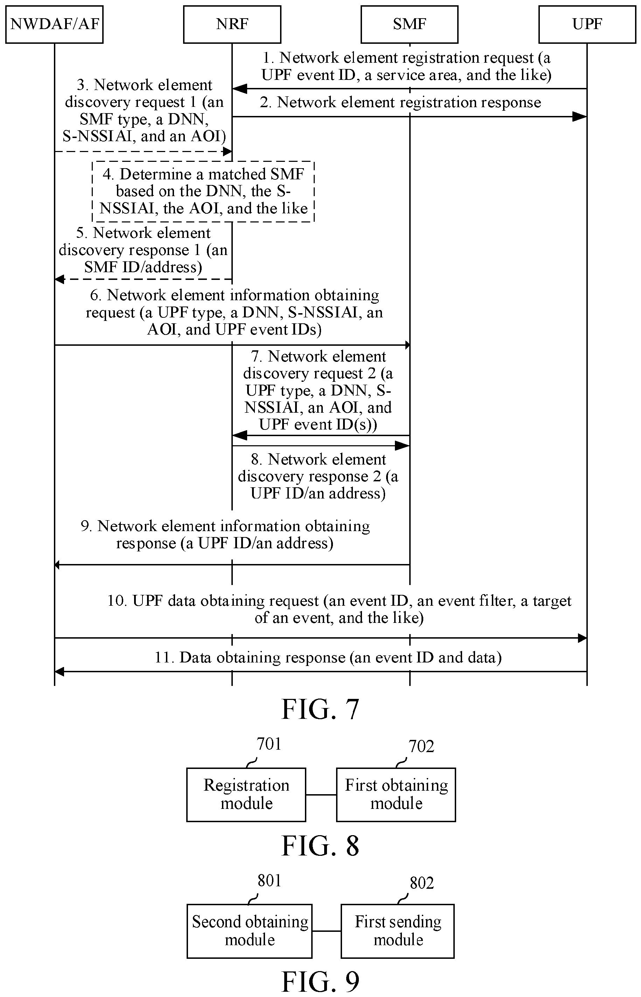

FIG. 7 is a schematic diagram 3 of a signaling interaction of a method for determining a user plane function network element according to an embodiment of this application. In the embodiment in FIG. 7, a second network element is an NWDAF/AF, a consumer network element is an SMF, a first network element is an NRF, and a user plane function network element is a UPF. As shown in FIG. 7, the signaling interaction includes the following steps:
1. A UPF initiates a network element registration request to an NRF, where the network element registration request is used to register network element information of the UPF to an NRF network element. The network element registration request may include at least one of the following:
   information about a DNN that is capable of being served by the UPF;
   information about a slice that is capable of being served by the UPF network element;
   information about an SMF area that is capable of being served by the UPF;
   IP address information of UE that is capable of being served by the UPF;
   service area information of the UPF;
   identification information of a data type supported by the UPF (UPF event ID);
   information about a session management function network element associated with the UPF;
   direct-obtaining capability indication information, where the direct-obtaining capability indication information is used to indicate that the user plane function network element supports a data consumption network element in directly obtaining data from the user plane function network element;
   indirect-obtaining capability indication information, where the indirect-obtaining capability indication information is used to indicate that the user plane function network element supports a data consumption network element in indirectly obtaining data from the user plane function network element by using a session management function network element;
   first indication information, where the first indication information is used to indicate whether the user plane function network element supports an ATSSS service; and
   second indication information, where the second indication information is used to indicate whether the user plane function network element supports an event exposure service (for example, a UPF event exposure service).
2. The NRF transmits a network element registration response to the UPF, where the network element registration response is used to indicate that a network element is successfully registered.
3. Optionally, an NWDAF/AF transmits a network element discovery request 1 to the NRF, where the network element discovery request 1 may include at least one of the following:
   fourth information, where the fourth information is used to indicate that a network element type requested for discovery is an SMF type;
   information about a second target DNN, used to indicate information about a DNN of interest to the NWDAF/AF;
   information about a second target slice, used to indicate information about a slice of interest to the NWDAF/AF; where the information about the second target slice may include one or more pieces of target S-NSSAI(s);
   information about a second target area, used to indicate an area of interest (area of interest, AOI) to the NWDAF/AF, for example, the AOI may be a TA, a cell, or another form of expression;
   information about a second target SMF area, used to indicate information about an SMF area of interest to the NWDAF/AF, where the information about the second target SMF area includes one or more SMF area identities (SMF Area Identity) of interest to the NWDAF/AF; and
   IP address information of second target UE, used to indicate IP address information of UE of interest to the NWDAF/AF.
4. The NRF determines a matched SMF based on the fourth information, the information about the second target DNN, the information about the second target slice, the information about the second target area, the information about the second target SMF area, the IP address information of the second target UE, and the like included in the network element discovery request 1.
5. The NRF transmits a network element discovery response 1 to the NWDAF/AF, where the network element discovery response 1 is used to indicate the matched SMF to the NWDAF/AF, for example, an ID (an SMF ID and an SMF FQDN) of the matched SMF, or an address (an SMF address) of the SMF.
6. The NWDAF/AF transmits a network element information obtaining request to the SMF, where the network element information obtaining request includes the third information, and the third information includes at least one of the following information:
   information about a first target area, used to indicate an area of interest to the second network element;
   first target data type identification information, used to indicate a data type of interest to the second network element;
   information about a first target DNN;
   information about a first target slice;
   information about a first target SMF area;
   IP address information of first target UE;
   fifth indication information, where the fifth indication information is used to indicate that the second network element requires a user plane function network element supporting an event exposure service; and
   sixth indication information, where the sixth indication information is used to indicate that the second network element requires a user plane function network element supporting an ATSSS service.
7. The SMF transmits a network element discovery request 2 to the NRF. For the network element discovery request 2, refer to the descriptions (step 601 in FIG. 6) of the data consumption network element transmitting the network element discovery request message to the first network element in the embodiment in FIG. 6. Details are not repeated herein again.
   In an implementation, the first information included in the network element discovery request message is determined based on the third information included in the network element information obtaining request.
8. The NRF transmits a network element discovery response 2 to the SMF. For the network element discovery response 2, refer to the descriptions (step 602 in FIG. 6) of the data consumption network element obtaining the network element discovery response message fed back by the first network element in the embodiment in FIG. 6. Details are not repeated herein again.
9. The SMF transmits a network element information obtaining response to the NWDAF, where the network element information obtaining response includes information about a determined target user plane function network element (a target UPF network element).
   In an implementation, the information about the target user plane function network element includes at least one of the following:
   an identifier of the target user plane function network element;
   an FQDN of the target user plane function network element;
   an IP address of the target user plane function network element; and
   profile (profile) information of the target user plane function network element;

The profile (profile) information of the target user plane function network element includes at least one of the following:
service area information of the target user plane function network element;
information about an event ID supported by the target user plane function network element;
service name information supported by the target user plane function network element;
information about a DNN served by the target user plane function network element;
information about a slice served by the target user plane function network element;
information about an SMF area served by the target user plane function network element; and
IP address information of UE served by the target user plane function network element.

10. The NWDAF/AF transmits a data obtaining request to the UPF, where the data obtaining request message includes at least one of the following information:
target data type identification information (event ID), indicating a to-be-obtained data type;
a target data filter (Event filter), used to limit a to-be-obtained data range, such as a time range or an area range;
a target data object (Event target), used to indicate a source object of to-be-obtained data, such as single specific UE, a specific UE group, or any UE;
target data reporting information (Event reporting information), used to limit a condition (event triggering or periodic triggering), a format (reporting based on a maximum value, aggregation reporting, or the like), a manner (performing reporting once, performing reporting a plurality of times, or the like), or the like of a data feedback; and
a notification target address (Notification target address), used to indicate a destination address to which data is reported, for example, the notification target address herein may be set to an address of the NWDAF/AF, or an address of another destination network element.

In an implementation, after the NWDAF/AF obtains the target UPF network element, the NWDAF directly initiates subscription to the target UPF network element by using an event exposure service (UPF event exposure service) of the target UPF network element.

11. The UPF network element may transmit a data obtaining response to the NWDAF/AF, where the data obtaining response includes target data corresponding to the data obtaining request, that is, a data result corresponding to the event ID and another piece of limiting information. After collecting data on demand, the UPF network element feeds back the data to a destination address specified by the NWDAF/AF.

It should be noted that, step 3, step 4, and step 5 in FIG. 7 are optional steps.

In an optional implementation, step 7 and step 8 may occur before step 6, that is, before the NWDAF/AF transmits the network element information obtaining request to the SMF, the SMF has already obtained the information about the target UPF network element from the NRF in advance.

In another optional implementation, step 7 may occur before step 1, but step 8 occurs after step 2, that is, the SMF subscribes to information about the UPF from the NRF in advance, and when the NRF has the information about the corresponding target UPF network element, the NRF notifies the SMF based on step 8.

FIG. 8 is a schematic diagram 1 of an apparatus for determining a user plane function network element according to an embodiment of this application. As shown in FIG. 8, this embodiment of this application provides an apparatus for determining a user plane function network element, including a registration module 701 and a first obtaining module 702.

The registration module 701 is configured to transmit a network element registration request message to a first network element, where the network element registration request message is used to register network element information of the user plane function network element to the first network element. The first obtaining module 702 is configured to obtain a network element registration response message transmitted by the first network element. The network element registration request message includes at least one of the following information corresponding to the user plane function network element:
information about a data network name (Data Network Name, DNN) that is capable of being served by the user plane function network element;
information about a slice that is capable of being served by the user plane function network element;
information about an SMF area that is capable of being served by the user plane function network element;
IP address information of UE that is capable of being served by the user plane function network element;
service area information of the user plane function network element;
identification information of a data type supported by the user plane function network element;
information about a session management function network element associated with the user plane function network element;
direct-obtaining capability indication information, where the direct-obtaining capability indication information is used to indicate that the user plane function network element supports a data consumption network element in directly obtaining data from the user plane function network element;
indirect-obtaining capability indication information, where the indirect-obtaining capability indication information is used to indicate that the user plane function network element supports a data consumption network element in indirectly obtaining data from the user plane function network element by using a session management function network element;
first indication information, where the first indication information is used to indicate whether the user plane function network element supports an access traffic steering, switching and splitting (Access Traffic Steering, Switching and Splitting, ATSSS) service; and
second indication information, where the second indication information is used to indicate whether the user plane function network element supports an event exposure service (for example, a UPF event exposure service).

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Optionally, the first network element includes a network repository function network element or the session management function network element.

The apparatus for determining a user plane function network element in this embodiment of this application may be an electronic device, for example, an electronic device with an operating system, or may be a component in an electronic device, such as an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The apparatus for determining a user plane function network element provided in this embodiment of this application can implement the processes implemented in the method embodiment in FIG. 2, and a same technical effect can be achieved. To avoid repetition, details are not described herein again.

FIG. 9 is a schematic diagram 2 of an apparatus for determining a user plane function network element according to an embodiment of this application. As shown in FIG. 9, this embodiment of this application provides an apparatus for determining a user plane function network element, including a second obtaining module 801 and a first transmitting module 802.

The second obtaining module 801 is configured to obtain a network element registration request message transmitted by a user plane function network element, where the network element registration request message is used to register network element information of the user plane function network element to a first network element.

The network element registration request message includes at least one of the following information corresponding to the user plane function network element:
information about a data network name (Data Network Name, DNN) that is capable of being served by the user plane function network element;
information about a slice that is capable of being served by the user plane function network element;
information about an SMF area that is capable of being served by the user plane function network element;
IP address information of UE that is capable of being served by the user plane function network element;
service area information of the user plane function network element;
identification information of a data type supported by the user plane function network element;
information about a session management function network element associated with the user plane function network element;
direct-obtaining capability indication information, where the direct-obtaining capability indication information is used to indicate that the user plane function network element supports a data consumption network element in directly obtaining data from the user plane function network element;
indirect-obtaining capability indication information, where the indirect-obtaining capability indication information is used to indicate that the user plane function network element supports a data consumption network element in indirectly obtaining data from the user plane function network element by using a session management function network element;
first indication information, where the first indication information is used to indicate whether the user plane function network element supports an access traffic steering, switching and splitting (Access Traffic Steering, Switching and Splitting, ATSSS) service; and
second indication information, where the second indication information is used to indicate whether the user plane function network element supports an event exposure service (for example, a UPF event exposure service).

The first transmitting module 802 is configured to transmit a network element registration response message to the user plane function network element.

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Optionally, the second obtaining module 801 is further configured to obtain a network element discovery request message transmitted by the data consumption network element, where the network element discovery request message includes first information, where the first information includes at least one of the following information:
information about a target area, used to indicate an area of interest to the data consumption network element;
target data type identification information, used to indicate a data type of interest to the data consumption network element;
information about a target DNN;
information about a target slice;
information about a target SMF area;
IP address information of target UE;
third indication information, where the third indication information is used to indicate that the data consumption network element requires a user plane function network element supporting an event exposure service; and
fourth indication information, where the fourth indication information is used to indicate that the data consumption network element requires a user plane function network element supporting an ATSSS service.

The apparatus for determining a user plane function network element further includes a determining module, and the determining module is configured to determine, based on the network element discovery request message, a target user plane function network element that matches the first information; and
the first transmitting module 802 is further configured to transmit a network element discovery response message to the data consumption network element.

Optionally, the determining a target user plane function network element that matches the first information includes:
the determining module determining the target user plane function network element based on the information about the target area included in the first information, where a service area of the target user plane function network element matches the target area; and/or
the determining module determining the target user plane function network element based on the information about the target area included in the first information, where a service area of a session management function network element associated with the target user plane function network element matches the target area; and/or
the determining module determining the target user plane function network element based on the target data type identification information included in the first information, where the target user plane function network element is capable of providing data corresponding to the target data type identification information; and/or
the determining module determining the target user plane function network element based on the information about the target DNN included in the first information, where information about a DNN that is capable of being served by the target user plane function network element matches the information about the target DNN; and/or
the determining module determining the target user plane function network element based on the information about the target slice included in the first information, where information about a slice that is capable of being served by the target user plane function network element matches the information about the target slice; and/or
the determining module determining the target user plane function network element based on the information about the target SMF area included in the first information, where information about an SMF area that is capable of being served by the target user plane function network element matches the information about the target SMF area; and/or
the determining module determining the target user plane function network element based on the IP address information of the target UE included in the first information, where IP address information of UE that is capable of being served by the target user plane function network element matches the IP address information of the target UE;
the determining module determining the target user plane function network element based on the third indication information included in the first information, where the target user plane function network element supports an event exposure service; and/or
the determining module determining the target user plane function network element based on the fourth indication information included in the first information, where the target user plane function network element supports an ATSSS service.

Optionally, the determining module is further configured to determine, based on the target data type identification, that the target user plane function network element supports directly obtaining the data corresponding to the target data type identification information.

Optionally, the network element discovery response message includes at least one of the following: information about the target user plane function network element and information about the session management function network element associated with the target user plane function network element.

Optionally, the network element discovery response message includes direct-obtaining capability indication information, and the direct-obtaining capability indication information is used to indicate that the target user plane function network element supports the data consumption network element in directly obtaining data from the target user plane function network element.

Optionally, the network element discovery response message includes an identifier or address information of the target user plane function network element.

Optionally, the determining module is further configured to determine, based on the target data type identification information, that the target user plane function network element supports indirectly obtaining the data corresponding to the target data type identification information.

Optionally, the network element discovery response message includes indirect-obtaining capability indication information, and the indirect-obtaining capability indication information is used to indicate that the target user plane function network element supports the data consumption network element in indirectly obtaining data from the target user plane function network element by using the session management function network element.

Optionally, the network element discovery response message includes information about a target session management function network element associated with the target user plane function network element.

Optionally, the apparatus for determining a user plane function network element includes: the session management function network element or a network repository function network element.

Optionally, the apparatus for determining a user plane function network element includes a network repository function network element, and the data consumption network element includes a network data analytics function network element or an application function network element; or
the apparatus for determining a user plane function network element includes a session management function network element, and the data consumption network element includes a network data analytics function network element or an application function network element; or
the apparatus for determining a user plane function network element includes a network repository function network element, and the data consumption network element includes the session management function network element. The apparatus for determining a user plane function network element in this embodiment of this application may be an electronic device, for example, an electronic device with an operating system, or may be a component in an electronic device, such as an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The apparatus for determining a user plane function network element provided in this embodiment of this application can implement the processes implemented in the method embodiment in FIG. 5, and a same technical effect can be achieved. To avoid repetition, details are not described herein again.

FIG. 10 is a schematic diagram 3 of an apparatus for determining a user plane function network element according to an embodiment of this application. As shown in FIG. 10, this embodiment of this application provides an apparatus for determining a user plane function network element, including a second transmitting module 901 and a third obtaining module 902.

The second transmitting module 901 is configured to transmit a network element discovery request message to a first network element, where the network element discovery request message includes first information, where the first information is used to determine a target user plane function network element that matches the first information; and the first information includes at least one of the following information:
information about a target area, used to indicate an area of interest to a data consumption network element;
target data type identification information, used to indicate a data type of interest to the data consumption network element;
information about a target DNN;
information about a target slice;
information about a target SMF area;
IP address information of target UE;
third indication information, where the third indication information is used to indicate that the data consumption network element requires a user plane function network element supporting an event exposure service; and
fourth indication information, where the fourth indication information is used to indicate that the data consumption network element requires a user plane function network element supporting an ATSSS service.

The third obtaining module 902 is configured to obtain a network element discovery response message fed back by the first network element.

Optionally, a service area of the target user plane function network element matches the target area; and/or
a service area of a session management function network element associated with the target user plane function network element matches the target area; and/or
the target user plane function network element is determined by the first network element based on the target data type identification information included in the first information, and the target user plane function network element is capable of providing data corresponding to the target data type identification information; and/or
information about a DNN that is capable of being served by the target user plane function network element matches the information about the target DNN; and/or
information about a slice that is capable of being served by the target user plane function network element matches the information about the target slice; and/or
information about an SMF area that is capable of being served by the target user plane function network element matches the information about the target SMF area; and/or
IP address information of UE that is capable of being served by the target user plane function network element matches the IP address information of the target UE; and/or
the target user plane function network element supports an event exposure service; and/or
the target user plane function network element supports an ATSSS service.

Optionally, the network element discovery response message includes direct-obtaining capability indication information, and the direct-obtaining capability indication information is used to indicate that the target user plane function network element supports the data consumption network element in directly obtaining data from the user plane function network element.

Optionally, the network element discovery response message includes an identifier or address information of the target user plane function network element.

Optionally, the second transmitting module 901 is configured to directly transmit a data obtaining request message to the target user plane function network element; and
the data consumption network element obtains a data obtaining response message transmitted by the target user plane function network element, where the data obtaining response message includes target data corresponding to the data obtaining request message.

Optionally, the network element discovery response message includes indirect-obtaining capability indication information, and the indirect-obtaining capability indication information is used to indicate that the target user plane function network element supports the data consumption network element in indirectly obtaining data from the user plane function network element by using the session management function network element.

Optionally, the network element discovery response message includes information about a target session management function network element associated with the target user plane function network element.

Optionally, the second transmitting module 901 is configured to transmit a data obtaining request message to the target session management function network element; and
the third obtaining module 902 is configured to obtain a data obtaining response message transmitted by the target session management function network element or the user plane function network element, where the data obtaining response message includes target data corresponding to the data obtaining request message.

Optionally, the apparatus for determining a user plane function network element may be a data consumption network element, the data consumption network element includes a network data analytics function network element or an application function network element, and the first network element includes the session management function network element; or
the data consumption network element includes a network data analytics function network element or an application function network element, and the first network element includes a network repository function network element; or
the data consumption network element includes the session management function network element, and the first network element includes a network repository function network element.

Optionally, when the data consumption network element includes the session management function network element, and the first network element includes the network repository function network element, the method further includes:
receiving, by the data consumption network element, a network element information obtaining request transmitted by a second network element, where the network element information obtaining request includes third information; and the third information is used to determine a user plane function network element that matches the third information; and transmitting, by the data consumption network element, a network element information obtaining response to the second network element, where the network element information obtaining response includes information about the target user plane function network element; and
the third information includes at least one of the following:
   information about a first target area, used to indicate an area of interest to the second network element;
   first target data type identification information, used to indicate a data type of interest to the second network element;
   information about a first target DNN;
   information about a first target slice;
   information about a first target SMF area;
   IP address information of first target UE;
   fifth indication information, where the fifth indication information is used to indicate that the second network element requires a user plane function network element supporting an event exposure service; and
   sixth indication information, where the sixth indication information is used to indicate that the second network element requires a user plane function network element supporting an ATSSS service.

Optionally, the data consumption network element determines the first information based on the third information.

The apparatus for determining a user plane function network element in this embodiment of this application may be an electronic device, for example, an electronic device with an operating system, or may be a component in an electronic device, such as an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The apparatus for determining a user plane function network element provided in this embodiment of this application can implement the processes implemented in the method embodiment in FIG. 6, and a same technical effect can be achieved. To avoid repetition, details are not described herein again.

FIG. 11 is a schematic diagram of a structure of a network side device according to an embodiment of this application. As shown in FIG. 11, this embodiment of this application further provides a network side device, including: a processor 1001, a network interface 1002, and a memory 1003. The network interface 1002 is, for example, a common public radio interface (common public radio interface, CPRI).

The network interface 1002 is configured to: transmit a network element registration request message to a first network element, where the network element registration request message is used to register network element information of a user plane function network element to the first network element; and obtain a network element registration response message transmitted by the first network element. The network element registration request message includes at least one of the following information corresponding to the user plane function network element:
information about a data network name (Data Network Name, DNN) that is capable of being served by the user plane function network element;
information about a slice that is capable of being served by the user plane function network element;
information about an SMF area that is capable of being served by the user plane function network element;
IP address information of UE that is capable of being served by the user plane function network element;
service area information of the user plane function network element;
identification information of a data type supported by the user plane function network element;
information about a session management function network element associated with the user plane function network element;
direct-obtaining capability indication information, where the direct-obtaining capability indication information is used to indicate that the user plane function network element supports a data consumption network element in directly obtaining data from the user plane function network element;
indirect-obtaining capability indication information, where the indirect-obtaining capability indication information is used to indicate that the user plane function network element supports a data consumption network element in indirectly obtaining data from the user plane function network element by using a session management function network element;
first indication information, where the first indication information is used to indicate whether the user plane function network element supports an access traffic steering, switching and splitting (Access Traffic Steering, Switching and Splitting, ATSSS) service; and
second indication information, where the second indication information is used to indicate whether the user plane function network element supports an event exposure service (for example, a UPF event exposure service).

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Optionally, the first network element includes a network repository function network element or the session management function network element.

Specifically, the network side device 1000 in this embodiment of the present invention further includes: an instruction or a program that is stored in the memory 1003 and that can be run by the processor 1001. The processor 1001 invokes the instruction or the program in the memory 1003 to perform the method performed by the modules shown in FIG. 8, and a same technical effect is achieved. To avoid repetition, details are not described herein again.

The memory 1003 may be configured to store a software program and various data. The memory 1003 may mainly include a first storage area for storing a program or an instruction and a second storage area for storing data. The first storage area may store an operating system, and an application program or an instruction required by at least one function (such as a sound playing function or an image playing function). In addition, the memory 1003 may be a volatile memory or a non-volatile memory, or the memory 1003 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1003 in this embodiment of this application includes but is not limited to the memories and any memory of another proper type.

The processor 1001 may include one or more processing units. Optionally, an application processor and a modem processor are integrated into the processor 1001, the application processor mainly processes operations related to an operating system, a user interface, an application program, and the like, and the modem processor mainly processes a wireless communication signal, for example, a baseband processor. It can be understood that the modem processor may alternatively not be integrated into the processor 1001.

FIG. 12 is a schematic diagram of a structure of a network side device according to an embodiment of this application. As shown in FIG. 12, this embodiment of this application further provides a network side device 1100, including: a processor 1101, a network interface 1102, and a memory 1103. The network interface 1102 is, for example, a common public radio interface (common public radio interface, CPRI).

The network interface 1102 is configured to: obtain a network element registration request message transmitted by a user plane function network element, where the network element registration request message is used to register network element information of the user plane function network element to the first network element; and transmit a network element registration response message to the user plane function network element. The network element registration request message includes at least one of the following information corresponding to the user plane function network element:
information about a data network name (Data Network Name, DNN) that is capable of being served by the user plane function network element;
information about a slice that is capable of being served by the user plane function network element;
information about an SMF area that is capable of being served by the user plane function network element;
IP address information of UE that is capable of being served by the user plane function network element; service area information of the user plane function network element;
identification information of a data type supported by the user plane function network element;
information about a session management function network element associated with the user plane function network element;
direct-obtaining capability indication information, where the direct-obtaining capability indication information is used to indicate that the user plane function network element supports a data consumption network element in directly obtaining data from the user plane function network element;
indirect-obtaining capability indication information, where the indirect-obtaining capability indication information is used to indicate that the user plane function network element supports a data consumption network element in indirectly obtaining data from the user plane function network element by using a session management function network element;
first indication information, where the first indication information is used to indicate whether the user plane function network element supports an access traffic steering, switching and splitting (Access Traffic Steering, Switching and Splitting, ATSSS) service; and
second indication information, where the second indication information is used to indicate whether the user plane function network element supports an event exposure service (for example, a UPF event exposure service).

Optionally, when the network element registration request message includes the direct-obtaining capability indication information, the network element registration request message includes first data type identification information, where the first data type identification information is used to indicate that the user plane function network element supports the data consumption network element in directly obtaining data corresponding to the first data type identification information from the user plane function network element.

Optionally, when the network element registration request message includes the indirect-obtaining capability indication information, the network element registration request message includes second data type identification information, where the second data type identification information is used to indicate that the user plane function network element supports the data consumption network element in indirectly obtaining data corresponding to the second data type identification information from the user plane function network element by using the session management function network element.

Optionally, when the network element registration request message includes the indirect-obtaining capability indication information, the network element registration request message includes the information about the session management function network element associated with the user plane function network element, and the session management function network element associated with the user plane function network element supports obtaining data from the user plane function network element based on a data obtaining request message transmitted by a data message network element.

Optionally, the network interface 1102 is configured to obtain a network element discovery request message transmitted by the data consumption network element, where the network element discovery request message includes first information, where the first information includes at least one of the following information:
information about a target area, used to indicate an area of interest to the data consumption network element;
target data type identification information, used to indicate a data type of interest to the data consumption network element;
information about a target DNN;
information about a target slice;
information about a target SMF area;
IP address information of target UE;
third indication information, where the third indication information is used to indicate that the data consumption network element requires a user plane function network element supporting an event exposure service; and
fourth indication information, where the fourth indication information is used to indicate that the data consumption network element requires a user plane function network element supporting an ATSSS service.

The processor 1101 determines, based on the network element discovery request message, a target user plane function network element that matches the first information; and
the first network element transmits a network element discovery response message to the data consumption network element.

Optionally, the determining a target user plane function network element that matches the first information includes:
the processor 1101 determining the target user plane function network element based on the information about the target area included in the first information, where a service area of the target user plane function network element matches the target area; and/or
the processor 1101 determining the target user plane function network element based on the information about the target area included in the first information, where a service area of a session management function network element associated with the target user plane function network element matches the target area; and/or
the processor 1101 determining the target user plane function network element based on the target data type identification information included in the first information, where the target user plane function network element is capable of providing data corresponding to the target data type identification information; and/or
the processor 1101 determining the target user plane function network element based on the information about the target DNN included in the first information, where information about a DNN that is capable of being served by the target user plane function network element matches the information about the target DNN; and/or
the processor 1101 determining the target user plane function network element based on the information about the target slice included in the first information, where information about a slice that is capable of being served by the target user plane function network element matches the information about the target slice; and/or
the processor 1101 determining the target user plane function network element based on the information about the target SMF area included in the first information, where information about an SMF area that is capable of being served by the target user plane function network element matches the information about the target SMF area; and/or
the processor 1101 determining the target user plane function network element based on the IP address information of the target UE included in the first information, where IP address information of UE that is capable of being served by the target user plane function network element matches the IP address information of the target UE;
the processor 1101 determining the target user plane function network element based on the third indication information included in the first information, where the target user plane function network element supports an event exposure service; and/or
the processor 1101 determining the target user plane function network element based on the fourth indication information included in the first information, where the target user plane function network element supports an ATSSS service.

Optionally, the processor 1101 determines, based on the target data type identification, that the target user plane function network element supports directly obtaining the data corresponding to the target data type identification information.

Optionally, the network element discovery response message includes direct-obtaining capability indication information, and the direct-obtaining capability indication information is used to indicate that the target user plane function network element supports the data consumption network element in directly obtaining data from the target user plane function network element.

Optionally, the network element discovery response message includes an identifier or address information of the target user plane function network element.

Optionally, the processor 1101 determines, based on the target data type identification information, that the target user plane function network element supports indirectly obtaining the data corresponding to the target data type identification information.

Optionally, the network element discovery response message includes indirect-obtaining capability indication information, and the indirect-obtaining capability indication information is used to indicate that the target user plane function network element supports the data consumption network element in indirectly obtaining data from the target user plane function network element by using the session management function network element.

Optionally, the network element discovery response message includes information about a target session management function network element associated with the target user plane function network element.

Optionally, the network side device 1100 may be: the session management function network element or a network repository function network element.

Optionally, the network side device 1100 includes a network repository function network element, and the data consumption network element includes a network data analytics function network element or an application function network element; or
the network side device 1100 includes a session management function network element, and the data consumption network element includes a network data analytics function network element or an application function network element; or
the network side device 1100 includes a network repository function network element, and the data consumption network element includes the session management function network element.

Specifically, the network side device 1100 in this embodiment of the present invention further includes: an instruction or a program that is stored in the memory 1103 and that can be run by the processor 1101. The processor 1101 invokes the instruction or the program in the memory 1103 to perform the method performed by the modules shown in FIG. 9, and a same technical effect is achieved. To avoid repetition, details are not described herein again.

The memory 1103 may be configured to store a software program and various data. The memory 1103 may mainly include a first storage area for storing a program or an instruction and a second storage area for storing data. The first storage area may store an operating system, and an application program or an instruction required by at least one function (such as a sound playing function or an image playing function). In addition, the memory 1103 may be a volatile memory or a non-volatile memory, or the memory 1103 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1103 in this embodiment of this application includes but is not limited to the memories and any memory of another proper type.

The processor 1101 may include one or more processing units. Optionally, an application processor and a modem processor are integrated into the processor 1101, the application processor mainly processes operations related to an operating system, a user interface, an application program, and the like, and the modem processor mainly processes a wireless communication signal, for example, a baseband processor. It can be understood that the modem processor may alternatively not be integrated into the processor 1101.

FIG. 13 is a schematic diagram 3 of a structure of a network side device according to an embodiment of this application. As shown in FIG. 13, this embodiment of this application further provides a network side device 1200, including: a processor 1201, a network interface 1202, and a memory 1203. The network interface 1202 is, for example, a common public radio interface (common public radio interface, CPRI).

The network interface 1202 is configured to: transmit a network element discovery request message to a first network element, where the network element discovery request message includes first information; and obtain a network element discovery response message fed back by the first network element, where the first information is used to determine a target user plane function network element that matches the first information; and the first information includes at least one of the following information:
information about a target area, used to indicate an area of interest to a data consumption network element;
target data type identification information, used to indicate a data type of interest to the data consumption network element;
information about a target DNN;
information about a target slice;
information about a target SMF area;
IP address information of target UE;
third indication information, where the third indication information is used to indicate that the data consumption network element requires a user plane function network element supporting an event exposure service; and
fourth indication information, where the fourth indication information is used to indicate that the data consumption network element requires a user plane function network element supporting an ATSSS service.

Optionally, a service area of the target user plane function network element matches the target area; and/or
the target user plane function network element is determined by the first network element based on the target data type identification information included in the first information, and the target user plane function network element is capable of providing data corresponding to the target data type identification information; and/or
information about a DNN that is capable of being served by the target user plane function network element matches the information about the target DNN; and/or
information about a slice that is capable of being served by the target user plane function network element matches the information about the target slice; and/or
information about an SMF area that is capable of being served by the target user plane function network element matches the information about the target SMF area; and/or
IP address information of UE that is capable of being served by the target user plane function network element matches the IP address information of the target UE; and/or
the target user plane function network element supports an event exposure service; and/or
the target user plane function network element supports an ATSSS service.

Optionally, the network element discovery response message includes direct-obtaining capability indication information, and the direct-obtaining capability indication information is used to indicate that the target user plane function network element supports the data consumption network element in directly obtaining data from the user plane function network element.

Optionally, the network element discovery response message includes an identifier or address information of the target user plane function network element.

Optionally, the network interface 1202 is configured to directly transmit a data obtaining request message to the target user plane function network element; and
the network interface 1202 is configured to obtain a data obtaining response message transmitted by the target user plane function network element, where the data obtaining response message includes target data corresponding to the data obtaining request message.

Optionally, the network element discovery response message includes indirect-obtaining capability indication information, and the indirect-obtaining capability indication information is used to indicate that the target user plane function network element supports the data consumption network element in indirectly obtaining data from the user plane function network element by using the session management function network element.

Optionally, the network element discovery response message includes information about a target session management function network element associated with the target user plane function network element.

Optionally, the network interface 1202 is configured to directly transmit a data obtaining request message to the target session management function network element; and
the network interface 1202 is configured to obtain a data obtaining response message transmitted by the target session management function network element or the user plane function network element, where the data obtaining response message includes target data corresponding to the data obtaining request message.

Optionally, the network side device 1200 may be a data consumption network element, the data consumption network element includes a network data analytics function network element or an application function network element, and the first network element includes the session management function network element; or
the data consumption network element includes a network data analytics function network element or an application function network element, and the first network element includes a network repository function network element; or
the data consumption network element includes the session management function network element, and the first network element includes a network repository function network element.

Optionally, when the data consumption network element includes the session management function network element, and the first network element includes the network repository function network element, the method further includes:
receiving, by the data consumption network element, a network element information obtaining request transmitted by a second network element, where the network element information obtaining request includes third information; and the third information is used to determine a user plane function network element that matches the third information; and transmitting, by the data consumption network element, a network element information obtaining response to the second network element, where the network element information obtaining response includes information about the target user plane function network element; and
the third information includes at least one of the following:
   information about a first target area, used to indicate an area of interest to the second network element;
   first target data type identification information, used to indicate a data type of interest to the second network element;
   information about a first target DNN;
   information about a first target slice;
   information about a first target SMF area;
   IP address information of first target UE;
   fifth indication information, where the fifth indication information is used to indicate that the second network element requires a user plane function network element supporting an event exposure service; and
   sixth indication information, where the sixth indication information is used to indicate that the second network element requires a user plane function network element supporting an ATSSS service.

Optionally, the data consumption network element determines the first information based on the third information.

Specifically, the network side device 1200 in this embodiment of the present invention further includes: an instruction or a program that is stored in the memory 1203 and that can be run by the processor 1201. The processor 1201 invokes the instruction or the program in the memory 1203 to perform the method performed by the modules shown in FIG. 10, and a same technical effect is achieved. To avoid repetition, details are not described herein again.

The memory 1203 may be configured to store a software program and various data. The memory 1203 may mainly include a first storage area for storing a program or an instruction and a second storage area for storing data. The first storage area may store an operating system, and an application program or an instruction required by at least one function (such as a sound playing function or an image playing function). In addition, the memory 1203 may be a volatile memory or a non-volatile memory, or the memory 1203 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1203 in this embodiment of this application includes but is not limited to the memories and any memory of another proper type.

The processor 1201 may include one or more processing units. Optionally, an application processor and a modem processor are integrated into the processor 1201, the application processor mainly processes operations related to an operating system, a user interface, an application program, and the like, and the modem processor mainly processes a wireless communication signal, for example, a baseband processor. It can be understood that the modem processor may not be integrated into the processor 1201.

An embodiment of this application further provides a readable storage medium. The readable storage medium stores a program or an instruction. When the program or the instruction is executed by a processor, the processes of the foregoing embodiment of the method for determining a user plane function network element are implemented, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, the processor is configured to run a program or an instruction to implement the processes of the foregoing embodiment of the method for determining a user plane function network element, and a same technical effect can be achieved. To avoid repetition, details are not described herein again.

It should be understood that the chip mentioned in this embodiment of this application may alternatively be referred to as a system-level chip, a system chip, a chip system, a system on chip, or the like.

An embodiment of this application further provides a computer program/program product. The computer program/program product is stored in a storage medium, and the computer program/program product is executed by at least one processor to implement the processes of the foregoing embodiment of the method for determining a user plane function network element, and a same technical effect can be achieved. To avoid repetition, details are not described herein again.

An embodiment of this application further provides a system for determining a user plane function network element, including: a user plane function network element, a first network element, and a data consumption network element, where the user plane function network element may be configured to perform the method for determining a user plane function network element described above, the first network element may be configured to perform the method for determining a user plane function network element described above, and the data consumption network element may be configured to perform the method for determining a user plane function network element described above.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the embodiments of this application is not limited to performing functions in the order shown or discussed, but may alternatively include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the conventional technology may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A method for determining a user plane function network element, wherein the method comprises:
transmitting, by a user plane function network element, a network element registration request message to a first network element, wherein the network element registration request message is used to register network element information of the user plane function network element to the first network element; and
obtaining, by the user plane function network element, a network element registration response message transmitted by the first network element, wherein
the network element registration request message comprises at least one of the following information corresponding to the user plane function network element:
service area information of the user plane function network element;
identification information of a data type supported by the user plane function network element;
information about a session management function network element associated with the user plane function network element;
direct-obtaining capability indication information, wherein the direct-obtaining capability indication information is used to indicate that the user plane function network element supports a data consumption network element in directly obtaining data from the user plane function network element; and
indirect-obtaining capability indication information, wherein the indirect-obtaining capability indication information is used to indicate that the user plane function network element supports the data consumption network element in indirectly obtaining data from the user plane function network element by using the session management function network element.

2. The method for determining a user plane function network element according to claim 1, wherein when the network element registration request message comprises the direct-obtaining capability indication information, the network element registration request message comprises first data type identification information, wherein the first data type identification information is used to indicate that the user plane function network element supports the data consumption network element in directly obtaining data corresponding to the first data type identification information from the user plane function network element.

3. The method for determining a user plane function network element according to claim 1, wherein when the network element registration request message comprises the indirect-obtaining capability indication information, the network element registration request message comprises second data type identification information, wherein the second data type identification information is used to indicate that the user plane function network element supports the data consumption network element in indirectly obtaining data corresponding to the second data type identification information from the user plane function network element by using the session management function network element.

4. The method for determining a user plane function network element according to claim 1 or 3, wherein when the network element registration request message comprises the indirect-obtaining capability indication information, the network element registration request message comprises the information about the session management function network element associated with the user plane function network element, and the session management function network element associated with the user plane function network element supports obtaining data from the user plane function network element based on a data obtaining request message transmitted by a data message network element.

5. The method for determining a user plane function network element according to claim 1, wherein the first network element comprises a network repository function network element or the session management function network element.

6. A method for determining a user plane function network element, comprising:
obtaining, by a first network element, a network element registration request message transmitted by a user plane function network element, wherein the network element registration request message is used to register network element information of the user plane function network element to the first network element, wherein
the network element registration request message comprises at least one of the following information corresponding to the user plane function network element:
service area information of the user plane function network element;
identification information of a data type supported by the user plane function network element;
information about a session management function network element associated with the user plane function network element;
direct-obtaining capability indication information, wherein the direct-obtaining capability indication information is used to indicate that the user plane function network element supports a data consumption network element in directly obtaining data from the user plane function network element; and
indirect-obtaining capability indication information, wherein the indirect-obtaining capability indication information is used to indicate that the user plane function network element supports the data consumption network element in indirectly obtaining data from the user plane function network element by using the session management function network element; and
transmitting, by the first network element, a network element registration response message to the user plane function network element.

7. The method for determining a user plane function network element according to claim 6, wherein when the network element registration request message comprises the direct-obtaining capability indication information, the network element registration request message comprises first data type identification information, wherein the first data type identification information is used to indicate that the user plane function network element supports the data consumption network element in directly obtaining data corresponding to the first data type identification information from the user plane function network element.

8. The method for determining a user plane function network element according to claim 6, wherein when the network element registration request message comprises the indirect-obtaining capability indication information, the network element registration request message comprises second data type identification information, wherein the second data type identification information is used to indicate that the user plane function network element supports the data consumption network element in indirectly obtaining data corresponding to the second data type identification information from the user plane function network element by using the session management function network element.

9. The method for determining a user plane function network element according to claim 6 or 8, wherein when the network element registration request message comprises the indirect-obtaining capability indication information, the network element registration request message comprises the information about the session management function network element associated with the user plane function network element, and the session management function network element associated with the user plane function network element supports obtaining data from the user plane function network element based on a data obtaining request message transmitted by a data message network element.

10. The method for determining a user plane function network element according to claim 6, wherein the method further comprises:
obtaining, by the first network element, a network element discovery request message transmitted by the data consumption network element, wherein the network element discovery request message comprises first information, wherein the first information comprises at least one of the following information:
information about a target area, used to indicate an area of interest to the data consumption network element;
target data type identification information, used to indicate a data type of interest to the data consumption network element;
information about a target DNN;
information about a target slice;
information about a target SMF area;
IP address information of target UE;
third indication information, wherein the third indication information is used to indicate that the data consumption network element requires a user plane function network element supporting an event exposure service; and
fourth indication information, wherein the fourth indication information is used to indicate that the data consumption network element requires a user plane function network element supporting an ATSSS service;
determining, by the first network element based on the network element discovery request message, a target user plane function network element that matches the first information; and
transmitting, by the first network element, a network element discovery response message to the data consumption network element.

11. The method for determining a user plane function network element according to claim 10, wherein the determining a target user plane function network element that matches the first information comprises:
determining, by the first network element, the target user plane function network element based on the information about the target area comprised in the first information, wherein a service area of the target user plane function network element matches the target area; and/or
determining, by the first network element, the target user plane function network element based on the information about the target area comprised in the first information, wherein a service area of the session management function network element associated with the target user plane function network element matches the target area; and/or
determining, by the first network element, the target user plane function network element based on the target data type identification information comprised in the first information, wherein the target user plane function network element is capable of providing data corresponding to the target data type identification information;
and/or
determining, by the first network element, the target user plane function network element based on the information about the target DNN comprised in the first information, wherein information about a DNN that is capable of being served by the target user plane function network element matches the information about the target DNN; and/or
determining, by the first network element, the target user plane function network element based on the information about the target slice comprised in the first information, wherein information about a slice that is capable of being served by the target user plane function network element matches the information about the target slice; and/or
determining, by the first network element, the target user plane function network element based on the information about the target SMF area comprised in the first information, wherein information about an SMF area that is capable of being served by the target user plane function network element matches the information about the target SMF area; and/or
determining, by the first network element, the target user plane function network element based on the IP address information of the target UE comprised in the first information, wherein IP address information of UE that is capable of being served by the target user plane function network element matches the IP address information of the target UE;
determining, by the first network element, the target user plane function network element based on the third indication information comprised in the first information, wherein the target user plane function network element supports an event exposure service; and/or
determining, by the first network element, the target user plane function network element based on the fourth indication information comprised in the first information, wherein the target user plane function network element supports an ATSSS service.

12. The method for determining a user plane function network element according to claim 10 or 11, wherein the network element discovery response message comprises at least one of the following: information about the target user plane function network element and information about the session management function network element associated with the target user plane function network element.

13. The method for determining a user plane function network element according to claim 11, wherein the method further comprises:
determining, by the first network element based on the target data type identification, that the target user plane function network element supports directly obtaining the data corresponding to the target data type identification information.

14. The method for determining a user plane function network element according to claim 13, wherein the network element discovery response message comprises direct-obtaining capability indication information, and the direct-obtaining capability indication information is used to indicate that the target user plane function network element supports the data consumption network element in directly obtaining data from the target user plane function network element.

15. The method for determining a user plane function network element according to claim 13, wherein the network element discovery response message comprises an identifier or address information of the target user plane function network element.

16. The method for determining a user plane function network element according to claim 11, wherein the method further comprises:
determining, by the first network element based on the target data type identification information, that the target user plane function network element supports indirectly obtaining the data corresponding to the target data type identification information.

17. The method for determining a user plane function network element according to claim 16, wherein the network element discovery response message comprises the indirect-obtaining capability indication information, and the indirect-obtaining capability indication information is used to indicate that the target user plane function network element supports the data consumption network element in indirectly obtaining data from the target user plane function network element by using the session management function network element.

18. The method for determining a user plane function network element according to claim 17, wherein the network element discovery response message comprises information about a target session management function network element associated with the target user plane function network element.

19. The method for determining a user plane function network element according to claim 6, wherein the first network element comprises: the session management function network element or a network repository function network element.

20. The method for determining a user plane function network element according to any one of claims 10 to 18, wherein
the first network element comprises a network repository function network element, and the data consumption network element comprises a network data analytics function network element or an application function network element; or
the first network element comprises the session management function network element, and the data consumption network element comprises a network data analytics function network element or an application function network element; or
the first network element comprises a network repository function network element, and the data consumption network element comprises the session management function network element.

21. A method for determining a user plane function network element, comprising:
transmitting, by a data consumption network element, a network element discovery request message to a first network element, wherein the network element discovery request message comprises first information, wherein the first information is used to determine a target user plane function network element that matches the first information; and the first information comprises at least one of the following information: information about a target area, used to indicate an area of interest to the data consumption network element; and
target data type identification information, used to indicate a data type of interest to the data consumption network element; and
obtaining, by the data consumption network element, a network element discovery response message fed back by the first network element.

22. The method for determining a user plane function network element according to claim 21, wherein a service area of the target user plane function network element matches the target area; and/or
a service area of a session management function network element associated with the target user plane function network element matches the target area; and/or
the target user plane function network element is determined by the first network element based on the target data type identification information comprised in the first information, and the target user plane function network element is capable of providing data corresponding to the target data type identification information.

23. The method for determining a user plane function network element according to claim 21 or 22, wherein the network element discovery response message comprises at least one of the following: information about the target user plane function network element and information about the session management function network element associated with the target user plane function network element.

24. The method for determining a user plane function network element according to claim 21, wherein the network element discovery response message comprises direct-obtaining capability indication information, and the direct-obtaining capability indication information is used to indicate that the target user plane function network element supports the data consumption network element in directly obtaining data from the user plane function network element.

25. The method for determining a user plane function network element according to claim 21, wherein the network element discovery response message comprises an identifier or address information of the target user plane function network element.

26. The method for determining a user plane function network element according to claim 21 or 24, wherein the method further comprises:
directly transmitting, by the data consumption network element, a data obtaining request message to the target user plane function network element; and
obtaining, by the data consumption network element, a data obtaining response message transmitted by the target user plane function network element, wherein the data obtaining response message comprises target data corresponding to the data obtaining request message.

27. The method for determining a user plane function network element according to claim 21, wherein the network element discovery response message comprises indirect-obtaining capability indication information, and the indirect-obtaining capability indication information is used to indicate that the target user plane function network element supports the data consumption network element in indirectly obtaining data from the user plane function network element by using the session management function network element.

28. The method for determining a user plane function network element according to claim 27, wherein the network element discovery response message comprises information about a target session management function network element associated with the target user plane function network element.

29. The method for determining a user plane function network element according to claim 28, wherein the method further comprises:
transmitting, by the data consumption network element, a data obtaining request message to the target session management function network element; and
obtaining, by the data consumption network element, a data obtaining response message transmitted by the target session management function network element or the user plane function network element, wherein the data obtaining response message comprises target data corresponding to the data obtaining request message.

30. The method for determining a user plane function network element according to any one of claims 21 to 29, wherein
the data consumption network element comprises a network data analytics function network element or an application function network element, and the first network element comprises the session management function network element; or
the data consumption network element comprises a network data analytics function network element or an application function network element, and the first network element comprises a network repository function network element; or
the data consumption network element comprises the session management function network element, and the first network element comprises a network repository function network element.

31. The method for determining a user plane function network element according to claim 30, wherein when the data consumption network element comprises the session management function network element and the first network element comprises the network repository function network element, the method further comprises:
receiving, by the data consumption network element, a network element information obtaining request transmitted by a second network element, wherein the network element information obtaining request comprises third information; and the third information is used to determine a user plane function network element that matches the third information; and transmitting, by the data consumption network element, a network element information obtaining response to the second network element, wherein the network element information obtaining response comprises the information about the target user plane function network element; and
the third information comprises at least one of the following:
information about a first target area, used to indicate an area of interest to the second network element;
first target data type identification information, used to indicate a data type of interest to the second network element;
information about a first target DNN;
information about a first target slice;
information about a first target SMF area;
IP address information of first target UE;
fifth indication information, wherein the fifth indication information is used to indicate that the second network element requires a user plane function network element supporting an event exposure service; and
sixth indication information, wherein the sixth indication information is used to indicate that the second network element requires a user plane function network element supporting an ATSSS service.

32. The method for determining a user plane function network element according to claim 31, wherein
the data consumption network element determines the first information based on the third information.

33. An apparatus for determining a user plane function network element, wherein the apparatus comprises:
a registration module, configured to transmit a network element registration request message to a first network element, wherein the network element registration request message is used to register network element information of the user plane function network element to the first network element; and
a first obtaining module, configured to obtain a network element registration response message transmitted by the first network element, wherein
the network element registration request message comprises at least one of the following information corresponding to the user plane function network element:
service area information of the user plane function network element;
identification information of a data type supported by the user plane function network element;
information about a session management function network element associated with the user plane function network element;
direct-obtaining capability indication information, wherein the direct-obtaining capability indication information is used to indicate that the user plane function network element supports a data consumption network element in directly obtaining data from the user plane function network element; and
indirect-obtaining capability indication information, wherein the indirect-obtaining capability indication information is used to indicate that the user plane function network element supports the data consumption network element in indirectly obtaining data from the user plane function network element by using the session management function network element.

34. An apparatus for determining a user plane function network element, comprising:
a second obtaining module, configured to obtain a network element registration request message transmitted by a user plane function network element, wherein the network element registration request message is used to register network element information of the user plane function network element to a first network element, wherein
the network element registration request message comprises at least one of the following information corresponding to the user plane function network element:
service area information of the user plane function network element;
identification information of a data type supported by the user plane function network element;
information about a session management function network element associated with the user plane function network element;
direct-obtaining capability indication information, wherein the direct-obtaining capability indication information is used to indicate that the user plane function network element supports a data consumption network element in directly obtaining data from the user plane function network element; and
indirect-obtaining capability indication information, wherein the indirect-obtaining capability indication information is used to indicate that the user plane function network element supports the data consumption network element in indirectly obtaining data from the user plane function network element by using the session management function network element; and
a first transmitting module, configured to transmit a network element registration response message to the user plane function network element.

35. An apparatus for determining a user plane function network element, comprising:
a second transmitting module, configured to transmit a network element discovery request message to a first network element, wherein the network element discovery request message comprises first information, wherein the first information is used to determine a target user plane function network element that matches the first information; and the first information comprises at least one of the following information:
information about a target area, used to indicate an area of interest to a data consumption network element; and
target data type identification information, used to indicate a data type of interest to a data consumption network element; and
a third obtaining module, configured to obtain a network element discovery response message fed back by the first network element.

36. A network side device, comprising a processor and a memory, wherein the memory stores a program or an instruction that can be run by the processor, and when the program or the instruction is executed by the processor, the method for determining a user plane function network element according to any one of claims 1 to 32 is implemented.

37. A readable storage medium, wherein the readable storage medium stores a program or an instruction, and when the program or the instruction is executed by a processor, the method for determining a user plane function network element according to any one of claims 1 to 32 is implemented.
